(19) Europäisches Patentamt
European Patent Office
Office européen des brevets

(11) EP 2 350 145 B1

(12) **EUROPEAN PATENT SPECIFICATION**

(45) Date of publication and mention of the grant of the patent:
**15.08.2018 Bulletin 2018/33**

(21) Application number: **09793266.9**

(22) Date of filing: **02.10.2009**

(51) Int Cl.:
***C08F 10/06*** *(2006.01)* ***C08F 4/643*** *(2006.01)*
***C08F 2/06*** *(2006.01)*

(86) International application number:
**PCT/US2009/059318**

(87) International publication number:
**WO 2010/053644 (14.05.2010 Gazette 2010/19)**

(54) **Homogeneous propylene polymerization in supercritical state and polypropylenes made therefrom**

Superkritische homogene propylenpolymerisation und daraus hergestellte polypropylene

Polymérisation de propylène homogène en phase supercritique et polypropylènes fabriqués ainsi

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **04.11.2008 US 264753**
**14.01.2009 EP 09150540**

(43) Date of publication of application:
**03.08.2011 Bulletin 2011/31**

(73) Proprietor: **ExxonMobil Chemical Patents Inc.**
**Baytown, TX 77520 (US)**

(72) Inventors:
- **MEHTA, Aspy, K.**
**Humble**
**TX 77346 (US)**
- **VARMA-NAIR, Manika**
**Warren**
**NJ 07059 (US)**
- **KISS, Gabor**
**Hampton**
**NJ 08827 (US)**
- **REYNOLDS, Robert, Patrick, Jr.**
**Clinton**
**NJ 08809 (US)**
- **CHU, John, W.**
**Neshanic Station**
**NJ 08853 (US)**
- **RUCKER, Steven, P.**
**Warren**
**NJ 07059 (US)**

(74) Representative: **ExxonMobil Chemical Europe Inc.**
**IP Law Europe**
**Hermeslaan 2**
**1831 Machelen (BE)**

(56) References cited:
**WO-A1-2009/082468** **US-A1- 2008 214 767**
**US-B1- 6 197 910**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 350 145 B1

**Description**

## FIELD OF THE INVENTION

The present invention relates to a process for producing propylene polymers and propylene polymers made by such a process.

## BACKGROUND OF THE INVENTION

Since the mid-1980s metallocene catalysts have been used in high-pressure reactors-mainly for producing ethylene-backbone polymers including ethylene copolymers with monomers of one or more of propylene, butene, and hexene, along with other specialty monomers such as 4-methyl-1,5-hexadiene. For example U.S. 5,756,608, granted to Langhausen et al., reports a process for polymerizing $C_2$ to $C_{10}$ 1-alkenes using bridged metallocene catalysts. Polypropylene production in high pressure conditions has, however, been seen as impractical and unworkable at temperatures much above the propylene critical point. A process to produce commercially useful polypropylene in a high pressure system would provide advantages, such as increased reactivity, or increased catalyst productivity, or higher throughput, or shorter residence times, etc. Likewise new polypropylene polymers are also in constant need for the preparation of new and improved products. Thus there is a need in the art to develop new processes capable of greater efficiency and manufacture of new polypropylene polymers.

Supercritical propylene polymerization under relatively mild conditions using supported Ziegler-Natta and metallocene catalysts has been described. Likewise, processes for preparing ethylene copolymers with $\alpha$-olefins in which polymerization is carried out at a pressure between 100-350 MPa and at a temperature from 200-280 °C using a catalyst based on a tetramethylcyclopentadienyl titanium complex is also known.

Olefin polymerization catalysts for use at polymerization temperatures exceeding the melting point temperature and approaching the polymer decomposition temperature are said to yield high productivity have also been described.

Continuous polyolefin production processes using a metallocene catalyst system and maintain at a pressure below the system's cloud-point pressure creating a polymer-rich and a monomer-rich phase and maintain the mixture's temperature above the polymer's melting point have also been described.

US 2008/0214767 A1 describes a process to produce polypropylene including contacting propylene, in a polymerizations system, with one or more catalyst systems, at a temperature above 90 °C. and a pressure above 12 MPa. The polymerization advantageously takes place in a homogenous polymerization system within a continuous polymerization reactor. In one or more embodiments, about 40 wt % or more propylene monomer, based on total weight of propylene monomer and up to about 60 wt% inert solvent, based on total weight of propylene monomer and inert solvent is fed into a polymerization reactor.

Numerous other publications address various aspects of polyolefin polymerization in an attempt to produce either new polyolefin products or to more efficiently produce products that compete with conventional polyolefin products. Nevertheless there is a need to provide processes that mitigate the costs by for example providing polymers that reduce the need for off-line compounding and rheology treatment to adjust the melt characteristics. At the same time, such a process should not compromise product and /or blend performance by providing propylene polymers that have a desirably narrow difference between the melting and crystallization peak temperatures. Process conditions and catalysts that are capable of providing such relatively high molecular weight polypropylene at more cost-effective lower monomer concentrations and milder temperatures and pressures are still needed in the art.

## SUMMARY OF THE INVENTION

This invention relates to a continuous process to produce polypropylene comprising contacting propylene in a reactor at 80 to 150 °C and 6.9 to 34.5 MPa, in the presence of an activator and a metallocene represented by the formula:

$$R_2Q\ bis(2\text{-}R^1\text{-}4\text{-}R^2\text{-indenyl})MX_2$$

wherein each R is, independently, hydrogen or a $C_1$ to $C_{20}$ hydrocarbyl group, Q is Si, C, CH-CH, or C-$CH_2$, $R^1$ is a $C_1$ to $C_{12}$ linear, branched or cyclic alkyl group, each $R^2$ is, independently, a naphthyl, substituted phenyl or substituted naphthyl group, M is Hf or Zr and X is a halide or a $C_1$ to $C_{20}$ hydrocarbyl group, wherein 15 to 30 wt % propylene monomer, and 85 wt % to 70 wt % solvent, based on total weight of propylene monomer and solvent, is fed into the polymerization reactor, and the polymerization occurs at a temperature above the solid-fluid phase transition temperature of the polymerization system and above a pressure greater than 1 MPa below the cloud point pressure of the polymerization system, provided however that the polymerization occurs: (1) at a temperature below the critical temperature of the polymerization system, or (2) at a pressure below the critical pressure of the polymerization system, recovering an

isotactic propylene homopolymer having:

1) more than 15 and less than 100 regio defects (sum of 2,1-erythro and 2,1-threo insertions and 3,1- isomerizations) per 10,000 propylene units;
2) an Mw (weight average molecular weight) of 35,000 g/mol or more;
3) a peak melting temperature of greater than 149 °C;
4) an mmmm pentad fraction of 0.85 or more;
5) a heat of fusion of 80 J/g or more; and
6) a peak melting temperature minus peak crystallization temperature (Tmp-Tcp) of less than or equal to (0.907 times Tmp) minus 99.64 (Tmp-Tcp $\leq$ (0.907xTmp) - 99.64), as measured in °C on the homopolymer having 0 wt % nucleating agent.

## DEFINITIONS

A catalyst system is defined to be the combination of one or more catalyst compounds and one or more activators. The term "catalyst compound" is used interchangeably herein with the terms "catalyst," "catalyst precursor," and "catalyst precursor compound."

A dense fluid is a liquid or supercritical fluid having a density of at least 300 kg/$m^3$.

The solid-fluid phase transition temperature is defined as the temperature below which a solid polymer phase separates from the homogeneous polymer-containing fluid medium at a given pressure. The solid-fluid phase transition temperature can be determined by temperature reduction at constant pressure starting from temperatures at which the polymer is fully dissolved in the fluid medium. The phase transition is observed as the system becoming turbid, when measured using the method described below for determining cloud point.

The solid-fluid phase transition pressure is defined as the pressure below which a solid polymer phase separates from the polymer-containing fluid medium at a given temperature. The solid-fluid phase transition pressure is determined by pressure reduction at constant temperature starting from pressures at which the polymer is fully dissolved in the fluid medium. The phase transition is observed as the system becoming turbid, when measured using the method described below for determining cloud point.

The fluid-fluid phase transition temperature is defined as the temperature below which two fluid phases - a polymer-rich phase and a monomer rich phase - form at a given pressure. The fluid-fluid phase transition temperature can be determined by temperature reduction at constant pressure starting from temperatures at which the polymer is fully dissolved in the fluid medium. The phase transition is observed as the system becoming turbid, when measured using the method described below for determining cloud point.

The fluid-fluid phase transition pressure or cloud point is defined as the pressure below which two fluid phases - a polymer-rich phase and a monomer rich phase - form at a given temperature. The fluid-fluid phase transition pressure can be determined by pressure reduction at constant temperature starting from pressures at which the polymer is fully dissolved in the fluid medium. The phase transition is observed as the system becomes turbid as described in J. Vladimir Oliveira, C. Dariva and J. C. Pinto, Ind. Eng, Chem. Res. 29, 2000, 4627. For purposes of this invention and the claims thereto, the cloud point is measured by shining a helium-neon laser through the selected polymerization system in a cloud point cell onto a photocell and recording the pressure at the onset of rapid increase in light scattering for a given temperature. Cloud point pressure is the point at which at a given temperature, the polymerization system becomes turbid. Cloud point temperature is the point at which at a given pressure, the polymerization system becomes turbid. It should be noted that although both the cloud point pressure and cloud point temperature are well-defined physical properties, in the area of polymer engineering, "cloud point" typically refers to the cloud point pressure.

A higher $\alpha$-olefin is defined to be an $\alpha$-olefin having 4 or more carbon atoms.

The use of the term "polymerization" encompasses any polymerization reaction such as homopolymerization and copolymerization. A copolymerization encompasses any polymerization reaction of two or more monomers.

The new numbering scheme for the Periodic Table Groups is used as published in Chemical and Engineering News, 63(5), 27 (1985).

When a polymer or oligomer is referred to as comprising an olefin, the olefin present in the polymer or oligomer is the polymerized or oligomerized form of the olefin. An oligomer is defined to be compositions having 2-120 monomer units. A polymer is defined to be compositions having 121 or more monomer units.

A polymerization system is defined to be monomer(s) plus comonomer(s) plus polymer(s) plus optional inert solvent(s)/diluent(s) plus optional scavenger(s). Note that for the sake of convenience and clarity, the catalyst system is always addressed separately in the present discussion from other components present in a polymerization reactor. In this regard, the polymerization system is defined here narrower than customary in the art of polymerization that typically considers the catalyst system as part of the polymerization system. In the current definition, the mixture present in the polymerization reactor and in its effluent is composed of the polymerization system plus the catalyst system.

To be in the supercritical state, a substance must have a temperature above its critical temperature (Tc) and a pressure above its critical pressure (Pc). If not measured, critical temperatures (Tc) and critical pressures (Pc) are those found in the Handbook of Chemistry and Physics, David R. Lide, Editor-in-Chief, 82nd edition 2001-2002, CRC Press, LLC. New York, 2001. In particular, the Tc and Pc of propylene are 364.9 K and 4.6 MPa. In the event a Tc and/or Pc cannot be measured for a given system, then the Tc and/or Pc will be deemed to be the Tc and/or Pc of the mole fraction weighted averages of the corresponding Tc's and Pc's of the system components.

The following abbreviations are used: Me is methyl, Ph is phenyl, Et is ethyl, Pr is propyl, iPr is isopropyl, n-Pr is normal propyl, Bu is butyl, iBu is isobutyl, tBu is tertiary butyl, p-tBu is para-tertiary butyl, TMS is trimethylsilyl, TIBA is triisobutylaluminum, MAO is methylaluminoxane, pMe is para-methyl, flu is fluorenyl, cp is cyclopentadienyl, Ind is indenyl.

The term "continuous" is defined to mean a system that operates without interruption or cessation. For example a continuous process to produce a polymer would be one where the reactants are continually introduced into one or more reactors and polymer product is continually withdrawn.

A slurry polymerization means a polymerization process in which particulate, solid polymer forms in a dense fluid or in a liquid/vapor polymerization medium. The dense fluid polymerization medium can form a single or two fluid phases, such as liquid, or supercritical fluid, or liquid/liquid, or supercritical fluid/supercritical fluid polymerization medium. In a liquid/vapor polymerization medium the polymer resides in the liquid (dense fluid) phase.

A solution polymerization means a polymerization process in which the polymer is dissolved in a liquid polymerization system, such as an inert solvent or monomer(s) or their blends. A solution polymerization is typically performed in a homogeneous liquid polymerization system.

A supercritical polymerization means a polymerization process in which the polymerization system is in a dense (i.e. its density is 300 $kg/m^3$ or higher), supercritical state.

A bulk polymerization means a polymerization process in which a dense fluid polymerization system contains less than 40 wt % of inert solvent or diluent. The product polymer may be dissolved in the dense fluid polymerization system or may form a solid phase. In this terminology, a slurry polymerization, in which solid polymer particulates form in a dense fluid polymerization system containing less than 40 wt % of inert solvent or diluent, is referred to as a bulk slurry polymerization process or bulk heterogeneous polymerization process. A polymerization process in which the polymeric product is dissolved in a dense fluid polymerization system containing less than 40 wt % of inert solvent or diluent is referred to as bulk homogeneous polymerization process. A polymerization process in which the polymeric product is dissolved in a liquid polymerization system containing less than 40 wt % of inert solvent or diluent is referred to as bulk solution polymerization process. A polymerization process in which the polymeric product is dissolved in a supercritical polymerization system containing less than 40 wt % of inert solvent or diluent is referred to as bulk homogeneous supercritical polymerization process.

In a homogeneous polymerization system, the polymer product is uniformly dissolved in the polymerization medium. Such systems are not turbid as described in J. Vladimir Oliveira, C. Dariva and J. C. Pinto, Ind. Eng. Chem. Res. 29, 2000, 4627. For purposes of this invention and the claims thereto, turbidity is measured by shining a helium-neon laser through the selected polymerization system in a cloud point cell onto a photocell and determining the point of the onset of rapid increase in light scattering for a given polymerization system. Uniform dissolution in the polymerization medium is indicated when there is little or no light scattering (i.e. less than 5%)

The term "high boiling point diluent" refers to a hydrocarbon having a boiling point of 30°C or more than the boiling point of propylene (-47.6 °C at 760 mmHg). Advantageous high boiling point diluents have a boiling point of 50 °C or more, or 70 °C or more, or 100 °C or more, or 120 °C or more, or or more than the boiling point of propylene (-47.6 °C at 760 mmHg).

For purposes of this invention and the claims thereto, a nucleating agent is defined as an organic or inorganic substance that, when added to the polypropylene described herein at a concentration in a range of 0.005 to 10 wt %, increases the crystallization temperature by at least 3 °C as determined by differential scanning calorimetry at a cooling rate of 10 °C/min.

Unless otherwise noted, all molecular weights units (e.g., Mw, Mn, Mz) are g/mol and all ppm's are wt ppm.

The term solvent refers to a dense fluid having a boiling point of 30 °C or more than the boiling point of propylene at 760 mm Hg (-47.6 °C at 760 mm Hg).

## DETAILED DESCRIPTION

In an advantageous embodiment, this invention relates to a propylene homopolymer and process for polymerizing propylene in a homogeneous polymerization system. The propylene homopolymer advantageously has a weight-average molecular weight (Mw) of 35,000 g/mol or more. In one or more embodiment, the Mw can be 50,000 g/mol or more; 100,000 g/mol or more; 150,000 g/mol or more; 200,000 g/mol or more; or 500,000 g/mol or more. The propylene homopolymer advantageously has an Mw ranging from about 35,000 to 1,000,000; alternatively from 50,000 to 1,000,000;

alternatively from 75,000 to 750,000; alternatively from 100,000 to 400,000. Weight average molecular weights (Mw) are determined using Gel-Permeation Chromatography (GPC), as described in more detail below.

The propylene homopolymer advantageously has a peak melting point, also referred to as peak melting temperature, or melting peak temperature (Tmp) of 149 °C or more, advantageously 150 °C or more, alternatively 151 °C or more, alternatively 152 °C or more, alternatively 153 °C or more, alternatively 154 °C or more, alternatively 155 °C or more. In one or more embodiments, the peak melting temperature can range from about 150 °C to about 170 °C, alternatively from 150 °C to about 165 °C, alternatively from 152 °C to about 160 °C. Peak melting temperature (Tmp) is determined using Differential Scanning Calorimetry (DSC), as described in more detail below.

The propylene homopolymer described herein advantageously has a crystallization half time (Tc-half), as measured by differential scanning calorimetry (DSC), in the absence of any nucleating agents (e.g. 0 wt %), at 126 °C of 12.0 minutes or less, advantageously 12.0 to 3.9 minutes, advantageously 11.5- to 3.4 minutes, advantageously 11.0 to 2.9 minutes, more advantageously 10.5 to 2.4 minutes.

In the current disclosure, the difference between the melting and crystallization peak temperatures (Tmp - Tcp) as measured by DSC will be also referred to as supercooling range and will be expressed in °C. In one or more embodiments, the homopolymer described herein has a supercooling range (peak melting temperature minus peak crystallization temperature (Tmp-Tcp)) of less than or equal to (0.907 times Tmp) minus 100.14 °C (or expressed by the formula of Tmp-Tcp < (0.907xTmp) - 100.14 °C), as measured on the homopolymer having 0 wt % nucleating agent, advantageously Tmp-Tcp < (0.907xTmp) - 99.64 °C.

In one or more embodiments, the propylene homopolymer advantageously has more than 15 and less than 100 regio defects (defined as the sum of 2,1-erythro and 2,1-threo insertions, and 3,1- isomerizations) per 10,000 propylene units, alternatively more than 17 and less than 100 regio defects per 10,000 propylene units, alternatively more than 20 or 30 or 40, but less than 95 regio defects, alternatively less than 90 regio defects per 10,000 propylene units. The regio defects are determined using $^{13}C$ NMR spectroscopy as described below.

The propylene homopolymer advantageously has a heat of fusion (ΔHf) of 80 J/g or more, alternatively of 90 J/g or more, alternatively of 100 J/g or more, alternatively of 110 J/g or more, alternatively of 120 J/g or more. Heat of fusion (Hf or ΔHf) is determined by using Differential Scanning Calorimetry (DSC), as described in more detail below.

The disclosed propylene homopolymers have little or extremely low inorganic residues typically originating from the catalyst systems (i.e., from the catalyst precursors, activators, and optional supports) and the optional scavengers, such as, for example, alkyl aluminum compounds, or methyl aluminoxane (MAO), etc. In some embodiments, the polymer product has less than 1 weight % silica, or less than 0.1 weight % silica, or less than 100 wt ppm silica, or less than 10 wt ppm silica. In other embodiments, the polymer product contains less than 100 wt ppm Group-4 transition metal, or less than 10 wt ppm Group-4 metal. In a advantageous embodiment, the disclosed homopolymers have a combined Group-4 transition metal (e.g., Ti, Zr, or Hf) and aluminum content of 100 wt ppm or less, or 50 wt ppm or less, or 10 weight ppm or less. In an advantageous embodiment, polymer has an inorganic catalyst residue of 100 weight ppm or less, the inorganic catalyst residue comprising Group 4, Group 6, and Group 8 transition metals, boron, aluminum, and silicon.

The disclosed propylene homopolymers advantageously have narrow molecular weight distribution (MWD) expressed as the ratio of the number and weight average molecular weights (Mw/Mn, measured by GPC with DRI detector) of greater than 1 to less than 5, advantageously 1.2 to 5, or 1.5 to 4, or 1.8 to 3.5 or 1.8 to 3, or 1.8 to 2.5. In an advantageous embodiment the Mw/Mn is greater than 1 and less than or equal to 5. The disclosed propylene homopolymers advantageously have a melt flow rate (MFR, ASTM D1238 at 230 °C / 2.16 kg) of about 15,000 g/10 min or less, alternatively from 0.1 to 15,000, alternatively from 1 to 10,000, alternatively from 1 to 5,000, alternatively from 10 to 200 g/10 min.

The disclosed propylene homopolymers advantageously have a branching index (g') measured as described below of between 0.85 and 1.10, alternatively from 0.90 to 1.05, alternatively from 0.95 to 1.05.

## Polymerization Process

In one or more embodiments, the process to produce polypropylene described herein includes contacting propylene, in a polymerization system, with one or more catalyst systems, at a temperature ranging from 80 to and at a pressure ranging from 6.9 to 34.5 MPa. The polymerization advantageously takes place in a homogeneous polymerization system within a continuous polymerization reactor. In one or more embodiments, 15 to less than 35 wt % propylene monomer and from 85 wt % to more than 65 wt % solvent, based on total weight of propylene monomer and optional inert solvent and inert diluent, is fed into a polymerization reactor. Advantageously, about 30 wt % or less propylene monomer, based on total weight of the polymerization system, is present in the reactor effluent at steady state conditions. In one or more embodiments above or elsewhere herein, the monomer feed to the process can include one or more diluents. Scavengers and co-catalysts can also be included in the reactor feed.

In one or more embodiments, the monomer feed can contain 18 wt %, 20 wt %, 22 wt %, 25 wt %, 27 wt % or

30 wt % propylene, based on total weight of propylene and optional inert solvents and/or inert diluents entering the reactor. In one or more embodiments, the monomer feed can contain monomer ranging from 20 wt % to 30 wt %, based on total weight of propylene and optional inert solvents and/or inert diluents entering the reactor. In one or more embodiments, the monomer feed can contain monomer ranging from 25 wt % to 30 wt %, based on total weight of monomer and optional inert solvents and/or inert diluents entering the reactor.

The polymerization system contains from 85 wt % to 70 wt % inert solvent. In one or more embodiments, the polymerization system contains greater than 70 wt % and less than 80 wt % inert solvent. In one or more embodiments, the inert solvent content of the polymerization system can range from a low of 70 wt %, or 73 wt % to an upper limit of 75 wt %, or 77 wt %, 80 wt %, or 83 wt %. The inert solvent typically comprises hydrocarbons containing from 4 to 100 carbon atoms, advantageously from 4 to 8 carbon atoms. In certain embodiments, the inert solvent is or includes hexane isomers.

In one or more embodiments, the density of the polymerization system is about 0.3 g/mL or more, or about 0.4 g/mL or more, or about 0.5 g/mL or more, or about 0.6 g/mL or more.

In one or more embodiments, the steady state polymer yield (i.e. conversion of propylene monomer to polymer product in a single pass through the reactor) is at least 5 wt % of the propylene monomer fed to the reactor. In one or more embodiments, the conversion of propylene monomer to polymer product in a single pass through the reactor is at least 10%. In one or more embodiments, the conversion of propylene monomer to polymer product in a single pass through the reactor is at least 20%, or at least 30%, or at least 40% but less than 90%, or less than 80%, or less than 70% in a single pass through the reactor.

In one or more embodiments, the polymerization conditions are sufficient to maintain the polymerization system in a single, homogeneous fluid state. For example, the minimum reaction temperature and pressure are selected so that the polymer produced, and the polymerization system that solvates it, remain single phase, i.e. above the polymerization system's cloud point and above its solid-fluid phase transition temperature and pressure with that polymer. Also, lower temperatures generally favor higher crystallinity and higher molecular weight, which are often key product attributes to meet. Furthermore, for homogeneous polymerization processes, the lower limits of reaction temperature can also be determined by the solid-fluid phase transition temperature. Reactors operated below the solid-fluid phase transition temperature of the reaction mixture can lead to operation problems due to fouling. For the production of highly crystalline polypropylenes (melting peak temperatures >150 °C) in homogeneous polymerization processes, the minimum operating temperature is about 80-100 °C. The application of certain inert solvents can further reduce the minimum operation temperature of the fouling-free operation regime, although the substantial presence of inert solvents can reduce polymerization rate, product molecular weight, and can depress the melting peak temperature. The upper limit for temperature can be determined by the product properties that are strongly influenced by the reaction temperature. For example, higher molecular weights and/or higher melting temperatures are generally inversely related to the reaction temperature. Increased temperatures can also degrade many known catalytic systems, providing another reason for avoiding excessive polymerization temperatures. Advantageously, the polymerization temperatures for the production of the disclosed polypropylenes are typically between 80 °C and 150°C, or between 90 and 140°C, or between 100°C and 130°C, or between 110°C and 120°C.

In the disclosed processes for making highly crystalline polypropylenes with the above-described melting and supercooling properties and defect structure, the reaction pressure are typically no lower than the solid-fluid phase transition pressure of the polymer-containing dense fluid polymerization system at the reactor temperature. In another embodiment, the pressure is no lower than 10 MPa below the cloud point of the fluid reaction medium at the reactor temperature. In another embodiment, the pressure is between 6.9 and 34.5 MPa, or between 8 and 30 MPa, or between 8 and 25 MPa, or between 8 and 20 MPa, or between 8 and 17 MPa, or between 10 and 17 MPa. In another embodiment, the pressure is above 7, 8, or 9 MPa and below 32, 30, 28, 27, 26, 25, 22, 20, 18, or 15 MPa. In another embodiment, the process to produce polypropylene described herein includes contacting propylene, in a polymerization system, with one or more or catalyst systems, a solvent, and optionally diluent, at a temperature above 80 °C (advantageously above 95 °C, or above 100 °C, advantageously between 95 and 150 °C) and at a pressure above 6.9 MPa (advantageously above 8 MPa, advantageously between 8 MPa and 30 MPa).

## Catalyst System

Polymerization catalysts capable of producing the desired polypropylene under the relatively mild conditions and reduced monomer concentrations described herein typically comprise a catalyst precursor, an activator, and optional support. Useful catalyst precursors for the disclosed polymerization processes include metallocene catalysts represented by the formula:

$$R_2Q\ bis(2\text{-}R^1\text{-}4\text{-}R^2\text{-}indenyl)MX_2$$

wherein each R is, independently, hydrogen or a $C_1$ to $C_{20}$ hydrocarbyl group, Q is Si, C, CH-CH, or C-$CH_2$, $R^1$ is a $C_1$ to $C_{12}$ linear, branched or cyclic alkyl group, each $R^2$ is, independently, a naphthyl, substituted phenyl or substituted naphthyl group, M is Hf or Zr and X is a halide or a $C_1$ to $C_{20}$ hydrocarbyl group.

Useful metallocene precursor compounds also include $Me_2$Si-bis(2-R,4-Ph-indenyl)$MX_2$, where R is an alkyl group (such as methyl, ethyl, isopropyl, etc.), Ph is phenyl, or naphthyl, or N-carbazyl, or their substituted analogs, M is Hf or Zr, and X is a halogen or alkyl group (such as Cl or methyl), dimethylsilyl-bis(2-methyl-4-phenylindenyl)zirconium dimethyl (or dichloride), -dimethylsilyl-bis(2-methyl-4-(3',5'-di-t-butylphenyl)indenyl)zirconium dimethyl (or dichloride), dimethylsilyl-bis(2-methyl-4-naphthylindenyl)zirconium dimethyl (or dichloride), dimethylsilyl-bis(2-methyl-4-(N-carbazyl)indenyl)zirconium dimethyl (or dichloride), dimethylsilyl-bis(2-methyl-4-phenylindenyl)hafnium dimethyl (or dichloride), dimethylsilyl-bis(2-methyl-4-(3',5'-di-t-butyl-phenyl)indenyl)hafnium dimethyl (or dichloride), dimethylsilyl-bis(2-methyl-4-naphthylindenyl)hafnium dimethyl (or dichloride), and dimethylsilyl-bis(2-methyl-4-(N-carbazyl)indenyl)hafnium dimethyl (or dichloride).

In some embodiments, the catalyst systems used herein comprise an activator (advantageously a non coordinating anion such as, for example, trimethylammoniumtetrakis(pentafluorophenyl)borate, N,N-dimethylaniliniumtetrakis(pentafluorophenyl)borate, triphenylcarbeniumtetra(perfluorophenyl)borate, or N,N-dimethylaniliniumtetra(perfluorophenyl)borate and the like.

Further useful catalyst precursor compounds are represented by the formula:

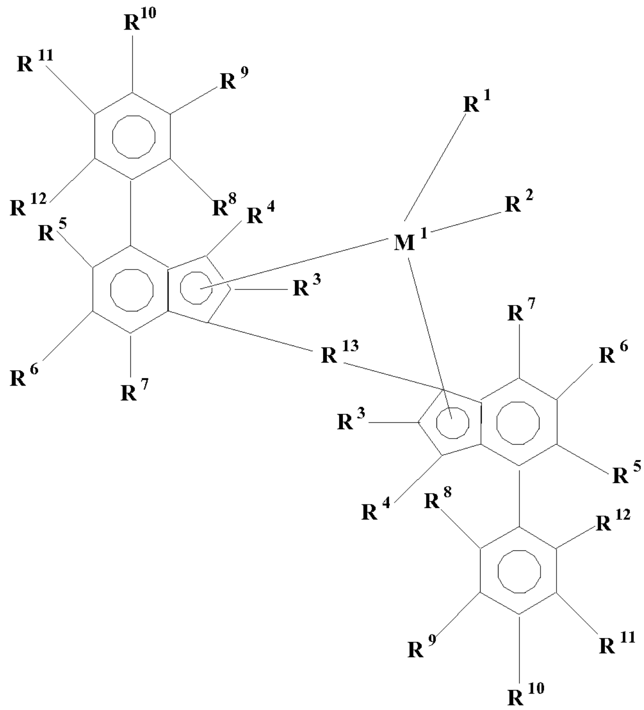

where $M^1$ is selected from zirconium or hafnium; $R^1$ and $R^2$ are individually selected from H, Cl, F, Br, I; $R^3$-$R^{12}$ are individually selected from H, substituted or unsubstituted, linear or branched hydrocarbyl groups having from 1-20 carbon atoms; and $R^{13}$ is a suitable bridging group such as for example $Me_2Si$, or $Ph_2Si$, or $(R\text{-}Ph)_2Si$, or $Me_2C$, or $Ph_2C$, or $(R\text{-}Ph)_2C$, where R is a linear or branched hydrocarbyl or hydrosilyl group having from 1-20 carbon atoms substituting the phenyl ring advantageously in the para position.

The catalysts can be activated by any activator affording the desired high catalytic activity. Exemplary, but nonlimiting activators include aluminoxanes, such as methylaluminoxane (MAO), and ionizing activators such as non-coordinating anions, such as borates, etc. Useful non-coordinating anions include trimethylammoniumtetrakis(pentafluorophenyl)borate, N,N-dimethylaniliniumtetrakis(pentafluorophenyl)borate, triphenylcarbeniumtetrakis(perfluorophenyl)borate, and N,N-dimethylanilinium tetra(perfluorophenyl)borate, and the like. Useful aluminoxanes can be obtained from commercial sources, for example, Akzo-Nobel Corporation, and include methylaluminoxane, MMAO-3A, MMAO-12, and PMAO-IP. Combinations of aluminoxanes, combinations of non-coordinating anion activators, and combinations of aluminoxanes and non-coordinating anion activators can be used in the practice of this invention. Useful metallocene and non-metallocene catalyst compounds disclosed in U.S. Serial No. 10/667,585 and U.S. 2006-0293474 which are herein incorporated by reference. Further advantageous catalyst and activator compounds and combinations thereof useful herein are listed at pages 21 to page 85 of WO 2004/026921 and at page 29, paragraph [0101] to page 66, line

4 of WO 2004/026921. Advantageous activator compounds useful herein include those listed at paragraph [00135] pages 77-78 of WO 2004/026921. Another group of catalyst compounds and activators (e.g. catalyst systems comprising one or more activators and one or more non-metallocene metal-centered, heteroaryl ligand catalyst compounds, where the metal is chosen from the Group 4, 5, 6, the lanthanide series, or the actinide series of the Periodic Table of the Elements) useful herein are disclosed in 11/714,546, filed March 6, 2007. Such catalyst compounds are also described in more detail in WO 03/040095; WO 03/040201; WO 03/040202; WO 03/040233; WO 03/040442; and US 7,087,690.

The molar ratio of catalyst precursor/activator employed advantageously ranges from 1:10,000 to 100:1, or from 1:5000 to 10:1, more advantageously from 1:100 to 1:1, or 1:10 to 1:1, or 1:5 to 1:1, or 1:2 to 1:1. In some embodiments, the activator can be used in combination with a tri(hydrocarbyl)aluminum or trialkylaluminum compounds having from 1 to 10 carbons in each hydrocarbyl or alkyl group. Mixtures of these tri(hydrocarbyl)aluminum or trialkylaluminum compounds may also be employed. In some embodiments, it is advantageous to employ these aluminum compounds for their beneficial ability to scavenge impurities such as oxygen, water, alcohols, and aldehydes from the polymerization mixture. Further advantageous aluminum compounds include trialkylaluminum compounds having from 1 to 6 carbons in each alkyl group, especially those wherein the alkyl groups are methyl, ethyl, propyl, isopropyl, n-butyl, isobutyl, pentyl, neopentyl or isopentyl. The molar ratio of the catalytic metal complex to scavenger aluminum compound is advantageously from 1:10,000 to 1:100, or from 1:1000 to 1:100, or from 1:100 to 1:1, or from 1:10 to 1:1.

## Scavengers

Scavengers can be optionally used. A scavenger can be any compound or combination of compounds that destroy an impurity without destroying the catalyst. Impurities can harm catalysts by reducing their activity. Illustrative scavengers include, but are not limited to, alkyl aluminum compounds, such as trimethylaluminum, triethylaluminum, tri-isobutylaluminum, and trioctylaluminum. The scavenger can also be the same as the catalyst activator and would be applied in excess of what is needed to fully activate the catalyst. These scavengers can include, but are not limited to, aluminoxanes, such as methylaluminoxane (MAO). The scavenger can be introduced to the reactor with the monomer feed or with any other feed stream. In one particular embodiment, the scavenger is introduced with the monomer-containing feed. The scavenger can be homogeneously dissolved in the polymerization system or can form a separate solid phase. In one particular embodiment, scavengers are dissolved in the polymerization system.

## Solvents/diluents

Solvents are typically hydrocarbon liquids that are intentionally fed to the polymerization reactor to aid the dissolution of the polymeric product. Solvents useful herein typically having a boiling point of 50 °C or more, or 70 °C or more, 100 °C or more, 120 °C or more, or 150 °C or more than the boiling point of propylene at 760 mm Hg (-47.6 °C at 760 mm Hg). Inert diluents, such as propane, ethane, butanes, etc., may also be introduced as impurities present in the monomer feed. In continuous reactor operations with monomer recycle, these inert diluents can build up, thus need to be purged from the system. While both the inert solvents and the inert diluents can aid the dissolution of the polymeric product, they are introduced differently and their effectiveness in the dissolution process is different. The presence of inert diluents typically is undesired since they dilute the system reducing reaction rates, and their purging leads to monomer losses and thus increase the cost of production. They are also typically less effective than solvents in aiding the dissolution of the product polypropylene. Therefore, the concentration of inert diluents is advantageously minimized in the feed and in the polymerization system. Inert solvents, on the other hand, are added to the polymerization system to aid the dissolution of the polymeric product and to absorb reaction heat. Advantageous inert solvents for the disclosed processes for making highly crystalline polypropylenes in a homogeneous polymerization dense fluid polymerization system include high-boiling hydrocarbons that include one or more of $C_4$-$C_{100}$ hydrocarbons. Particularly advantageous inert solvents include $C_4$-$C_{20}$, or $C_4$-$C_{12}$, or $C_4$-$C_8$ hydrocarbons. Illustrative advantageous inert solvents include, but are not limited to, n-butane, isobutane, n-pentane, isopentane, n-hexane, mixed hexanes, heptanes, octanes, cyclopentane, cyclohexane, etc., single-ring aromatics, such as toluene and xylenes. In some embodiments, the inert solvent comprises hexanes. Advantageously, the diluent is recyclable. Advantageous solvents are soluble in the polymerization system, and inert to the monomer, the catalyst system, and any other components present in the reactor at the polymerization temperatures and pressures used.

## Reactors

One or more reactors in series or in parallel can be used. The catalyst system can be delivered as a solution or slurry, either separately to the reactor, activated in-line just prior to the reactor, or preactivated and pumped as an activated solution or slurry to the reactor. Since heterogeneous (solid) catalysts are often difficult to handle in disclosed homogeneous polymerization processes (they tend to cause plugging and increased wear), advantageous catalyst

systems are soluble in the polymerization system. In one embodiment, two solutions, one comprising the one or more catalyst precursor compounds and another comprising the one or more activators, are blended in-line either in or prior to feeding them to the reactor. In other embodiments, the one or more catalyst precursor compounds are premixed with the one or more activators in solution, and a solution of the already activated catalyst is fed to the reactor.

Polymerizations can be carried out either in a single reactor, or in two or more reactors configured in series or parallel. In any operation mode, the catalyst system may comprise one, or more than one catalyst precursor and one or more activator. In both single- and multi-reactor operations, the one or more catalyst systems may be introduced at one point or at multiple points to the one or more polymerization reactors. Various feed configurations can be used depending on such factors as the desired product properties, such as, for example, molecular weight distribution, or catalyst stability. Such feed configurations are well known in the art of chemical engineering and can be readily optimized for the desired production scale and product properties using known engineering techniques.

In one or more embodiments, polymerization can occur in high-pressure reactors where, advantageously, the reactor is substantially unreactive with the polymerization reaction components and is able to withstand the high pressures and temperatures that occur during the polymerization reaction. Such reactors are known as high-pressure reactors for purposes of this disclosure. Withstanding these high pressures and temperatures will allow the reactor to maintain the polymerization system in its homogeneous condition.

Autoclave reactors may be operated in either a batch or continuous mode, although the continuous mode is typically advantageous. Tubular reactors always operate in continuous mode. Typically, autoclave reactors have length-to-diameter ratios of 1:1 to 20:1 and are fitted with a high-speed (up to 2000 RPM) multiblade stirrer and baffles arranged for optimal mixing. Commercial autoclave pressures are typically greater than 5 MPa with a maximum of typically less than 260 MPa. The maximum pressure of commercial autoclaves, however, may become higher with advances in mechanical and material science technologies.

When the autoclave has a low length-to-diameter ratio (such as less than four), the feed streams may be injected at one position along the length of the reactor. Reactors with large diameters may have multiple injection ports at nearly the same or different positions along the length of the reactor. When they are positioned at the same length of the reactor, the injection ports are radially distributed to allow for faster intermixing of the feed components with the reactor content. In the case of stirred tank reactors, the separate introduction of the catalyst and monomer may be advantageous in preventing the possible formation of hot spots in the unstirred feed zone between the mixing point and the stirred zone of the reactor. Injections at two or more positions along the length of the reactor are also possible and may be advantageous. In one exemplary embodiment, in reactors where the length-to-diameter ratio is from 4 to 20, the reactor may contain up to six different injection positions along the reactor length with multiple ports at some or each of the lengths.

Additionally, in the larger autoclaves, one or more lateral mixing devices may support the high-speed stirrer. These mixing devices can also divide the autoclave into two or more zones. Mixing blades on the stirrer may differ from zone to zone to allow for a different degree of plug flow and back mixing, largely independently, in the separate zones. Two or more autoclaves with one or more zones may connect in a series reactor cascade to increase residence time or to tailor polymer structure in a reactor train producing a polymer blending component. A series reactor cascade or configuration consists of two or more reactors connected in series, in which the effluent of at least one upstream reactor is fed to the next reactor downstream in the cascade. Besides the effluent of the upstream reactor(s), the feed of any reactor in the series reactor cascade of a reactor train can be augmented with any combination of additional monomer, catalyst, or solvent fresh or recycled feed streams.

While tubular reactors may generally be considered more suitable for higher pressures, they may also be used in the processes disclosed herein. Tubular reactors are fitted with external cooling and one or more injection points along the (tubular) reaction zone. As in autoclaves, these injection points serve as entry points for monomers (such as propylene), one or more comonomer, catalyst, or mixtures of these. In tubular reactors, external cooling often allows for increased monomer conversion relative to an autoclave, where the low surface-to-volume ratio hinders any significant heat removal. Tubular reactors have a special outlet valve that can send a pressure shockwave backward along the tube. The shockwave helps dislodge any polymer residue that has formed on reactor walls during operation. Alternatively, tubular reactors may be fabricated with smooth, unpolished internal surfaces to address wall deposits. Tubular reactors generally may have lengths of 100-2000 meters or 100-4000 meters, and may have internal diameters of less than 12.5 cm. Typically, tubular reactors have length-to-diameter ratios of 10:1 to 50,000:1 and include up to 10 different injection positions along its length.

Reactor trains that pair autoclaves with tubular reactors are also contemplated within the scope of the polymerization processes disclosed herein for making highly crystalline polypropylenes. In this reactor system, the autoclave typically precedes the tubular reactor or the two types of reactors form separate trains of a parallel reactor configuration. Such reactor systems may have injection of additional catalyst and/or feed components at several points in the autoclave, and more particularly along the tube length. In both autoclaves and tubular reactors, at injection, feeds are typically cooled to near ambient temperature or below to provide maximum cooling and thus maximum polymer production within

the limits of maximum operating temperature. In autoclave operation, a preheater may operate at startup, but not after the reaction reaches steady state if the first mixing zone has some back-mixing characteristics. In tubular reactors, the first section of double-jacketed tubing may be heated (especially at start ups) rather than cooled and may operate continuously. A well-designed tubular reactor is characterized by plug flow wherein plug flow refers to a flow pattern with minimal radial flow rate differences. In both multizone autoclaves and tubular reactors, catalyst can not only be injected at the inlet, but also optionally at one or more points along the reactor. The catalyst feeds injected at the inlet and other injection points can be the same or different in terms of content, density, and concentration. Catalyst feed selection allows polymer design tailoring within a given reactor or reactor train and/or maintaining the desired productivity profile along the reactor length.

In addition to autoclave reactors, tubular reactors, or a combination of these reactors, loop-type reactors may be utilized in the polymerization processes disclosed herein. In this reactor type, monomer enters and polymer exits continuously at different points along the loop, while an in-line pump continuously circulates the contents (reaction liquid). The feed/product takeoff rates control the total average residence time. A cooling jacket removes reaction heat from the loop. Typically feed inlet temperatures are near to or below ambient temperatures to provide cooling to the exothermic reaction in the reactor operating above the crystallization temperature of the polymer product. The loop reactor may have a diameter of 41 to 61 cm and a length of 100 to 200 meters and may operate at pressures of 25 to 30 MPa. In addition, an in-line pump may continuously circulate the polymerization system through the loop reactor.

The polymerization processes disclosed herein may have residence times in the reactors as short as 0.5 seconds and as long as several hours, alternatively from 1 sec to 120 min, alternatively from 1 second to 60 minutes, alternatively from 5 seconds to 30 minutes, alternatively from 30 seconds to 30 minutes, alternatively from 1 minute to 60 minutes, and alternatively from 1 minute to 30 minutes. More particularly, the residence time may be selected from 10, or 30, or 45, or 50, seconds, or 1, or 5, or 10, or 15, or 20, or 25, or 30 or 60 or 120 minutes. Maximum residence times may be selected from 1, or 5, or 10, or 15, or 30, or 45, or 60, or 120 minutes.

The monomer-to-polymer conversion rate (also referred to as the conversion rate) is calculated by dividing the total quantity of polymer that is collected during the reaction time by the amount of monomer added to the reaction. Lower conversions may be advantageous to limit viscosity although increase the cost of monomer recycle. The optimum total monomer conversion thus will depend on reactor design, product slate, process configuration, etc., and can be determined by standard engineering techniques. Total monomer conversion during a single pass through any individual reactor of the fluid phase in-line process for blending disclosed herein may be up to 90%, or below 80%, or below 60% or 3-80% , or 5-80%, or 10-80%, or 15-80%, or 20-80%, or 25-60%, or 3-60%, or 5-60%, or 10-60%, or 15-60%, or 20-60%, or 10-50%, or 5-40%, or 10-40%, or 40-50%, or 15-40%, or 20-40%, or 30-40% or greater than 5%, or greater than 10%.

Advantageously, catalyst productivities range from 100 to 500,000 kg PP/ (kg catalyst hr). This high level of catalyst productivity in combination of using unsupported catalysts, can result in low residual inorganic residues in the polymer product. In some embodiments, the polymer product has less than 1 weight % silica, or less than 0.1 weight % silica, or less than 100 wt ppm silica, or less than 10 wt ppm silica. In other embodiments, the polymer product contains less than less than 100 wt ppm Zr and Hf, or less than 10 wt ppm Zr and Hf. In a advantageous embodiment, the disclosed homopolymers have a combined Zr, Hf, and aluminum content of 100 wt ppm or less, or 50 wt ppm or less, or 10 wt ppm or less.

The invention also relates to one or more of the following embodiments:

1. A continuous process to produce polypropylene comprising contacting propylene in a reactor at 80 to and 6.9 to 34.5 MPa, in the presence of an activator and a metallocene represented by the formula:

$$R_2Q\ bis(2\text{-}R^1\text{-}4\text{-}R^2\text{-indenyl})MX_2$$

wherein each R is, independently, hydrogen or a $C_1$ to $C_{20}$ hydrocarbyl group, Q is Si, C, CH-CH, or C-$CH_2$, $R^1$ is a $C_1$ to $C_{12}$ linear, branched or cyclic alkyl group, each $R^2$ is, independently, a naphthyl, substituted phenyl or substituted naphthyl group, M is Hf or Zr and X is a halide or a $C_1$ to $C_{20}$ hydrocarbyl group, wherein 15 to 30 wt % propylene monomer, and 85 wt % to 70 wt % solvent, based on total weight of propylene monomer and solvent, is fed into the polymerization reactor, and the polymerization occurs at a temperature above the solid-fluid phase transition temperature of the polymerization system and above a pressure greater than 1 MPa below the cloud point pressure of the polymerization system, provided however that the polymerization occurs: (1) at a temperature below the critical temperature of the polymerization system, or (2) at a pressure below the critical pressure of the polymerization system,
recovering an isotactic propylene homopolymer having:

1) more than 15 and less than 100 regio defects (sum of 2,1-erythro and 2,1-threo insertions and 3,1-isomerizations) per 10,000 propylene units;
2) an Mw (weight average molecular weight) of 35,000 g/mol or more;
3) a peak melting temperature of greater than 149 °C;
4) an mmmm pentad fraction of 0.85 or more;
5) a heat of fusion of 80 J/g or more; and
6) a peak melting temperature minus peak crystallization temperature (Tmp-Tcp) of less than or equal to (0.907 times Tmp) minus 99.64 (Tmp-Tcp ≤ (0.907xTmp) - 99.64), as measured in °C on the homopolymer having 0 wt % nucleating agent.

2. The process according to preceding paragraph 1 wherein the polypropylene has an Mw/Mn ratio of greater than 1 to less than 5.

3. The process according to any of preceding paragraphs 1-2 wherein the polypropylene has an inorganic catalyst residue of 100 weight ppm or less, the inorganic catalyst residue comprising Zr, Hf, boron, aluminum, and silicon.

4. The process according to any of preceding paragraphs 1-3, where the peak melting temperature (Tmp) is from about 149 °C to about 170 °C.

5. The process according to any of preceding paragraphs 1-4, wherein the polypropylene has a branching index (g') of between 0.85 to 1.10.

6. The process according to any of preceding paragraphs 1-5, wherein the peak melting temperature minus peak crystallization temperature (Tmp-Tcp) is less than or equal to (0.907 times Tmp) minus 100.14, (measured in °C on the homopolymer having 0 wt % nucleating agent).

7. The process according to any of preceding paragraphs 1-6, wherein the peak melting temperature minus peak crystallization temperature (Tmp-Tcp) is less than or equal to (0.907 times Tmp) minus 100.64, (measured in °C on the homopolymer having 0 wt % nucleating agent).

8. The process according to any of preceding paragraphs 1-7, wherein the polypropylene has an mmmm pentad fraction of 0.98 or greater.

9. The process according to any of preceding paragraphs 1-8 wherein the polypropylene has a heat of fusion of 100 J/g or more.

10. The process according to any of preceding paragraphs 1-9, wherein the polypropylene has an Mw of 100,000g/mol or more.

11. The process according to any of preceding paragraphs 1-10 wherein the polypropylene has an Mw of 300,000 g/mol or more.

12. The process according to any of preceding paragraphs 1-11, where the peak melting temperature (Tmp) is from about 152 °C to about 170 °C.

13. The process according to any of preceding paragraphs 1-12, wherein the polypropylene has more than 17 and less than 95 defects per 10,000 propylene units.

14. The process according to any of preceding paragraphs 1-13, wherein the polypropylene has an mmmm pentad fraction of 0.95 or greater.

15. The process according to any of preceding paragraphs 1-14, particularly paragraph 11, wherein Mw is 200,000 g/mol or greater, the mmmm pentad fraction is 0.98 or greater, the peak melting temperature (Tmp) is to 170 °C, the heat of fusion is 95 J/g or greater and wherein the metallocene is selected from the group consisting of: dimethylsilyl-bis(2-methyl,4-phenylindenyl)zirconium dimethyl (or dichloride), dimethylsilyl-bis(2-methyl,4-(3',5'-di-t-butyl-phenyl)indenyl)zirconium dimethyl (or dichloride), dimethylsilyl-bis(2-methyl,4-naphthylindenyl)zirconium dimethyl (or dichloride), dimethylsilyl-bis(2-methyl,4-(N-carbazyl)indenyl)zirconium dimethyl (or dichloride), dimethylsilyl-bis(2-methyl,4-phenylindenyl)hafnium dimethyl (or dichloride), dimethylsilyl-bis(2-methyl,4-(3',5'-di-t-butyl-phenyl)indenyl)hafnium dimethyl (or dichloride), dimethylsilyl-bis(2-methyl,4-naphthylindenyl)hafnium dimethyl (or

dichloride), and dimethylsilyl-bis(2-methyl,4-(N-carbazyl)indenyl)hafnium dimethyl (or dichloride), or mixtures thereof, and the activator is selected from the group consisting of aluminoxane, trimethylammoniumtetrakis(pentafluorophenyl)borate, N,N-dimethylaniliniumtetrakis(pentafluorophenyl)borate, triphenylcarbeniumtetrakis(perfluorophenyl)borate, N,N-dimethyl-aniliniumtetrakis(perfluoronaphthyl)borate, N,N-dimethylaniliniumtetrakis(perfluorophenyl)-borate, and mixtures thereof.

16. The process according to any of preceding paragraphs 1-15, wherein the residence time is from about 3 minutes to about 30 minutes.

17. The process according to any of preceding paragraphs 1-16 wherein the reactor operates at 93 to 150 °C and 6.9 to 34.5 MPa, where the temperature is above the cloud point temperature and above the supercritical temperature of the polymerization system, and in the presence of an activator and a metallocene represented by the formula:

$$R_2Q\ \text{bis}(2\text{-}R^1\text{-}4\text{-}R^2\text{-indenyl})MX_2$$

wherein each R is, independently, hydrogen or a $C_1$ to $C_{20}$ hydrocarbyl group, Q is Si, C, CH-CH, or CH-$CH_2$, $R^1$ is a $C_1$ to $C_{12}$ linear, branched or cyclic alkyl group, $R^2$ is phenyl or naphthyl or a substituted phenyl or naphthyl group, M is Hf or Zr and X is a halide or a $C_1$ to $C_{20}$ hydrocarbyl group.

18. The process according to any of preceding paragraphs 1-17, particularly paragraph 17, wherein Mw is 200,000 g/mol or greater, the mmmm pentad fraction is 0.98 or greater, the peak melting temperature (Tmp) is 149 °C to 170 °C, the heat of fusion is 95 J/g or greater

19. The process according to any of preceding paragraphs 1-18, particularly paragraph 17, wherein the metallocene is selected from the group consisting of: dimethylsilyl-bis(2-methyl,4-phenylindenyl)zirconium dimethyl (or dichloride), dimethylsilyl-bis(2-methyl,4-(3',5'-di-t-butyl-phenyl)indenyl)zirconium dimethyl (or dichloride), dimethylsilyl-bis(2-methyl,4-naphthylindenyl)zirconium dimethyl (or dichloride), dimethylsilyl-bis(2-methyl,4-(N-carbazyl)indenyl)zirconium dimethyl (or dichloride), dimethylsilyl-bis(2-methyl,4-phenylindenyl)hafnium dimethyl (or dichloride), dimethylsilyl-bis(2-methyl,4-(3',5'-di-t-butyl-phenyl)indenyl)hafnium dimethyl (or dichloride), dimethylsilyl-bis(2-methyl,4-naphthylindenyl)hafnium dimethyl (or dichloride), and dimethylsilyl-bis(2-methyl,4-(N-carbazyl)indenyl)hafnium dimethyl (or dichloride), or mixtures thereof.

20. The process according to any of preceding paragraphs 1-19, particularly paragraph 17, wherein from about 20 wt % to about 30 wt % propylene monomer and from about 80 wt % to about 70 wt % solvent, based on total weight of propylene monomer and solvent, is fed into the polymerization reactor.

21. The process according to any of preceding paragraphs 1-20, particularly paragraph 17, wherein the catalyst productivity is about 100,000 g polymer per g of metallocene or more.

22. The process according to any of preceding paragraphs 1-21, particularly paragraph 17, wherein the residence time is about 3 minutes to about 30 minutes.

23. The process according to any of preceding paragraphs 1-22, particularly paragraph 17, wherein the activator is selected from the group consisting of aluminoxane, trimethylammoniumtetrakis(pentafluorophenyl)borate, N,N-dimethylaniliniumtetrakis(pentafluorophenyl)borate, triphenylcarbeniumtetrakis(perfluorophenyl)borate, N,N-dimethylaniliniumtetrakis(perfluoronaphthyl)borate, N,N-dimethylaniliniumtetrakis(perfluorophenyl)-borate, and mixtures thereof.

24. An article made from polypropylene made according to the process according to any of preceding paragraphs 1-23.

## EXAMPLES

### Propylene polymerization conditions:

All polymerizations were performed in solution polymerization systems (i.e., in the presence of substantial amounts of solvent, >35 wt %) and without monomer recycle. All polymerization experiments were performed in a continuous stirred tank reactor (CSTR) made by Autoclave Engineers, Erie PA. The reactor was designed for operating

at a maximum pressure and temperature of 207 MPa (30 kpsi) and 225 °C, respectively. The nominal reactor volume was 150 mL with a working volume of 127 mL (working volume lower due to reactor internals). The reactor was equipped with an electric heater and with a stirrer with a magnetic drive. A pressure transducer located on the monomer feed line measured the pressure in the reactor. The temperature was measured inside the reactor using a type-K thermocouple. The reactor was protected against over-pressurization by automatically opening an air-actuated valve (High Pressure Company, Erie, PA) in case the reactor pressure exceeded the preset limit. A flush-mounted rupture disk located on the side of the reactor provided further protection against catastrophic pressure failure. All product lines were heated to ~150 °C to prevent fouling. The reactor body had two heating bands that were controlled by a programmable logic control device (PLC). The reactor did not have cooling capability. Once the reactor lined out during polymerization, its temperature was controlled manually by adjusting the flow rates of the monomer and catalyst feeds. No external heating was necessary in most experiments, i.e. the reactor temperature was maintained by controlling the heat released by the polymerization process.

Two independent lock-hopper assemblies were used to manage the effluent flow from the reactor: one for waste collection during start up and shut down, and the other one for product collection during the balance period at lined-out, steady-state conditions. Each lock-hopper consisted of two air-actuated valves bracketing a short piece of high-pressure tubing. Changing the internal diameter and/or the length of the lock-hopper tube allowed the adjustment of the volume of the lock-hoppers. Aliquots of the reactor content were taken out continuously by running the lock-hopper valves in cycles. One lock-hopper cycle consisted of first opening and closing of the valve between the lock-hopper tube and the reactor followed by opening and closing the downstream valve. Adjustments in the frequency of the lock-hopper cycles allowed maintaining the desired reactor pressure at a preset feed rate. The volume and the frequency of the two lock-hoppers were always set the same to allow switching between the lock-hoppers without affecting the steady state condition of the reactor. A drain port on the bottom of the reactor was used to empty the reactor after each experiment.

Propylene was fed from low-pressure cylinders equipped with a dip leg for liquid delivery to the reactor. Heating blankets provided heat to increase the cylinder head pressure to deliver the monomer to the feed pump at a pressure above the bubble point of the feed. The low-pressure monomer feed was also stabilized against bubble formation by cooling the pump head using chilled water running at 10 °C. The monomer feed was purified using two separate beds in series: activated copper (reduced in flowing $H_2$ at 225 °C and 1 bar) for oxygen removal and molecular sieve (5A, activated in flowing $N_2$ at 270 °C) for water removal. The purified monomer feed was fed by a diaphragm pump (Model MhS 600/11, ProMinent Orlita, Germany) through the stirrer head into the reactor. The monomer flow rate was measured by a Coriolis mass flow meter (Model PROline Promass 80, Endress and Hauser) that was located downstream of the purification traps on the low-pressure side of the feed pump. The pressure fluctuation in the reactor caused some minor fluctuation in the feed rate. The reported feed flows were determined by averaging the flow rate during the entire balance period.

The catalyst feed solution was prepared inside an argon-filled dry box (Vacuum Atmospheres Co., Hawthorne, CA). The atmosphere in the glove box was purified to maintain <1 ppm $O_2$ and <1 ppm water. All glassware was oven-dried for a minimum of 4 hours at 120 °C and transferred hot to the antechamber of the dry box. Stock solutions of the catalyst precursors and the activators were prepared using purified toluene and stored in amber bottles inside the dry box. Aliquots were taken to prepare fresh activated catalyst solutions before each polymerization experiment. The catalyst solution was fed by dual-stage high-pressure syringe pumps (PDC, Inc., Warminster, PA). Catalyst concentrations of the catalyst feed were adjusted to maintain the target reaction temperature at feed rates that introduced not more than 3-8 wt % of catalyst solvent (toluene) into the reactor.

In a typical experiment, the reactor was preheated to ~10-15 °C below that of the desired reaction temperature. During the line-out period, the catalyst feed and lock-hopper rates were adjusted to reach and maintain the target reaction temperature and pressure. Once the reactor reached steady state at the desired conditions, product collection was switched from the waste collection to the on-balance product collection vessel. The reactor was typically run on-balance between 30 to 90 min, after which the effluent was redirected to the waste collection vessel and the reactor was shut down. The products were collected from the on-balance vessel. The products were vacuum-dried overnight at 70 °C before characterization. The conversion and reaction rates were determined based on the total feed used and the product yield during the balance period.

Anhydrous toluene from Sigma-Aldrich was used in catalyst preparation and for reactor flushing. Copper and molecular sieve traps were installed in the toluene feed line, the description of which is given earlier for the gas feed (vide supra). Propylene Grade 2.5 (BOC) was obtained in #100 low-pressure cylinders. Tri-isobutylaluminum (Sigma-Aldrich) was used for passivating the feed line and the reactor if they were exposed to air during maintenance. The hexane solvent was purified the same way as toluene. It was spiked with tri-n-octyl aluminum (TONAL) to eliminate the last traces of impurities and was fed to the reactor by a membrane pump (ProMinent Orlita, Germany).

Table 1 lists the catalysts precursor compositions, activators, and reactor conditions. Table 2 depicts the MFR, thermal properties (crystallization and melting data), and molecular weight data (obtained by differential refractive index - DRI detector) for the disclosed polypropylenes made at the conditions described in Table 1. Table 3 summarizes the

NMR characterization results. Note that each disclosed product listed in these tables is identified by a unique sample ID in the first column in Table 1. These ID numbers are the same as those listed in Tables 2 and 3. Melting and crystallization data listed were obtained at a cooling rate of 10 °C/min using differential scanning calorimetry (DSC). Details of the experimental conditions are described later (vide infra). Heat of fusion of the melting endotherm listed in the column indicated by ΔHf may be converted to % crystallinity as described later (vide infra). The difference between melting peak temperature (Tmp) and crystallization peak temperature (Tcp) is listed in the column indicated as Tmp-Tcp / Peak ΔT. The "Tmp-Tcp / Formula" column lists the values obtained by the formula:

$$\text{Formula} = \text{Tcp-0.093xTmp-99.64}.$$

Note that 0 ≤ Tcp-0.093xTmp-99.64 is the rearranged equivalent of the Tmp-Tcp ≤ 0.907xTmp-99.64, thus values greater than zero in the "Tmp-Tcp / Formula" column indicate polypropylenes that satisfy the supercooling criterion defined by Tmp-Tcp ≤ 0.907xTmp-99.64. In essence, when the Formula value for a polypropylene is greater than zero, its supercooling is lower and its crystallization rate is faster than the corresponding properties of prior art polypropylenes.

Molecular weight (Mw, Mn, Mz) listed in these tables are obtained via GPC as described herein.

**Table 1.** Process Conditions for the production of Inventive Polypropylenes

| Run # | Catalyst | | Reactor conditions | | | | | | | |
|---|---|---|---|---|---|---|---|---|---|---|
| | Precursor | Activator | Total solv. | Temp. | Pressure | | $C_3^=$ conv. | $C_3^=$ effluent | | Res. time |
| | | | wt % | °C | psig | MPa | % | wt % | mol/L | min |
| S1 | 1 | A | 67 | 99 | 1942 | 13.4 | 55 | 14.7 | 2.5 | 12.7 |
| S2 | 1 | A | 66 | 94 | 1569 | 10.8 | 25 | 25.5 | 3.7 | 9.9 |
| S3 | 1 | A | 66 | 98 | 1870 | 12.9 | 26 | 25.1 | 3.7 | 10.0 |
| S4 | 1 | A | 65 | 102 | 1786 | 12.3 | 45 | 19.1 | 3.0 | 10.9 |
| S5 | 1 | A | 65 | 102 | 1706 | 11.8 | 39 | 21.1 | 3.2 | 11.2 |
| S6 | 1 | B | 67 | 112 | 1650 | 11.4 | 39 | 20.3 | 3.0 | 9.3 |
| S7 | 1 | B | 65 | 111 | 1670 | 11.5 | 37 | 22.3 | 3.3 | 9.4 |
| S8 | 1 | B | 68 | 101 | 1870 | 12.9 | 47 | 16.9 | 2.6 | 11.1 |
| S9 | 1 | B | 67 | 101 | 1742 | 12.0 | 37 | 20.8 | 3.1 | 10.4 |
| S10 | 1 | B | 73 | 114 | 1589 | 11.0 | 50 | 13.6 | 2.1 | 9.1 |
| S11 | 1 | B | 74 | 110 | 1636 | 11.3 | 43 | 15.1 | 2.3 | 8.8 |
| S12 | 1 | B | 74 | 106 | 1617 | 11.2 | 41 | 15.2 | 2.3 | 8.8 |
| S13 | 1 | B | 75 | 100 | 1692 | 11.7 | 43 | 14.5 | 2.2 | 9.6 |
| S14 | 1 | B | 69 | 106 | 1648 | 11.4 | 39 | 18.9 | 2.9 | 9.2 |
| S15 | 1 | B | 74 | 115 | 1692 | 11.7 | 41 | 15.4 | 2.3 | 9.0 |
| S16 | 1 | B | 77 | 106 | 1656 | 11.4 | 50 | 11.3 | 1.7 | 9.4 |
| S17 | 1 | B | 78 | 110 | 1697 | 11.7 | 54 | 11.7 | 1.8 | 9.3 |
| S18 | 1 | B | 75 | 116 | 1697 | 11.7 | 39 | 20.7 | 3.1 | 9.2 |
| S19 | 1 | B | 78 | 100 | 1705 | 11.8 | 54 | 10.3 | 1.6 | 9.9 |
| S20 | 1 | A | 66 | 116 | 1742 | 12.0 | 47 | 18.0 | 2.8 | 10.5 |
| S21 | 2 | A | 68 | 102 | 2423 | 16.7 | 32 | 23.5 | 3.5 | 13.4 |
| S22 | 2 | A | 68 | 108 | 1919 | 13.2 | 32 | 20.6 | 3.2 | 13.7 |
| S23 | 2 | A | 70 | 107 | 1735 | 12.0 | 30 | 20.5 | 3.0 | 12.3 |
| S24 | 2 | B | 69 | 108 | 2041 | 14.1 | 31 | 20.1 | 3.0 | 12.8 |
| S25 | 2 | B | 69 | 114 | 1810 | 12.5 | 31 | 20.5 | 3.0 | 11.0 |
| S26 | 2 | B | 69 | 123 | 1703 | 11.7 | 31 | 21.7 | 3.2 | 10.1 |
| S27 | 2 | B | 65 | 119 | 1765 | 12.2 | 35 | 23.0 | 3.4 | 10.8 |

(continued)

| Run # | Catalyst | | Reactor conditions | | | | | | | |
|---|---|---|---|---|---|---|---|---|---|---|
| | Precursor | Activator | Total solv. | Temp. | Pressure | | $C_3^=$ conv. | $C_3^=$ effluent | | Res. time |
| | | | wt % | °C | psig | MPa | % | wt % | mol/L | min |
| S28 | 2 | B | 67 | 119 | 2003 | 13.8 | 33 | 19.5 | 3.0 | 11.9 |

Catalyst precursor:
1 = 3'5'-tBu-Q: dimethyl(μ-dimethylsilyl)bis(2-methyl-4-(3,'5'-di-tert-butylphenyl)indenyl)zirconium;
2 = dimethyl(μ-dimethylsilyl)bis(2-methyl-4-(N-carbazyl)indenyl)zirconium.
Activator:
A = dimethylaniliniumtetrakis(heptafluoronaphthyl)borate,
B = dimethylaniliniumtetrakis(pentafluorophenyl)borate.

**Table 2.** Properties for Inventive Polypropylenes

| Run # | MFR | Crystallization | | Melting (2nd) | | Tmp-Tcp | | DRI | | |
|---|---|---|---|---|---|---|---|---|---|---|
| | | Tco onset | Tcp peak | Tm peak | ΔHf | Peak ΔT | Formula* | Mw | Mw/Mn | Mz/Mw |
| | g/10 min | °C | °C | °C | J/g | °C | °C | kg/mol | | |
| S1 | 69 | 121.0 | 116.8 | 155.4 | 101.6 | 38.6 | 2.7 | 134.2 | 2.00 | 1.66 |
| S2 | 9 | 119.9 | 116.0 | 157.0 | 100.0 | 41.0 | 1.8 | 235.4 | 2.03 | 1.67 |
| S3 | 12 | 117.9 | 114.5 | 155.6 | 100.5 | 41.1 | 0.4 | 214.6 | 2.00 | 1.65 |
| S4 | 62 | 118.3 | 114.7 | 155.4 | 101.0 | 40.7 | 0.6 | 139.7 | 2.03 | 1.65 |
| S5 | 60 | 117.1 | 114.1 | 156.9 | 103.0 | 42.8 | -0.1 | 153.7 | 2.04 | 1.67 |
| S6 | 311 | 122.9 | 119.9 | 157.3 | 104.9 | 37.4 | 5.6 | 111.6 | 2.02 | 1.69 |
| S7 | 181 | 122.6 | 120.2 | 155.9 | 110.7 | 35.7 | 6.1 | 109.7 | 1.99 | 1.61 |
| S8 | 75 | 118.7 | 115.8 | 157.1 | 107.4 | 41.3 | 1.5 | 136.5 | 2.01 | 1.66 |
| S9 | 36 | 121.0 | 117.4 | 157.4 | 106.0 | 40.1 | 3.1 | 165.0 | 1.99 | 1.66 |
| S10 | 710 | 121.3 | 118.4 | 154.4 | 108.7 | 36.0 | 4.4 | 76.5 | 1.99 | 1.57 |
| S11 | 241 | 122.3 | 119.6 | 156.2 | 108.4 | 36.6 | 5.4 | 88.8 | 2.00 | 1.60 |
| S12 | 142 | 120.0 | 116.5 | 156.7 | 109.7 | 40.2 | 2.3 | 117.3 | 2.01 | 1.63 |
| S13 | 70 | 121.4 | 117.7 | 157.4 | 110.1 | 39.7 | 3.4 | 148.2 | 1.99 | 1.65 |
| S14 | 134 | 120.8 | 115.8 | 156.0 | 103.4 | 40.2 | 1.7 | 115.1 | 2.01 | 1.63 |
| S15 | 652 | 120.4 | 116.8 | 154.3 | 113.1 | 37.5 | 2.8 | 75.5 | 2.02 | 1.57 |
| S16 | 249 | 118.2 | 116.2 | 155.2 | 109.4 | 39.0 | 2.1 | 93.6 | 2.05 | 1.63 |
| S17 | 704 | 121.7 | 118.4 | 155.0 | 112.4 | 36.6 | 4.3 | 79.7 | 2.01 | 1.60 |
| S18 | 424 | 120.0 | 116.2 | 155.0 | 109.7 | 38.8 | 2.1 | 82.4 | 2.01 | 1.58 |
| S19 | 119 | 120.6 | 116.6 | 156.4 | 109.9 | 39.8 | 2.4 | 115.5 | 2.03 | 1.65 |
| S20 | 324 | 116.9 | 114.9 | 152.6 | 103.1 | 37.7 | 1.1 | 87.8 | 2.03 | 1.59 |
| S21 | 2 | 119.3 | 116.1 | 157.4 | 100.7 | 41.3 | 1.8 | 400.1 | 2.30 | 1.66 |
| S22 | 7 | 118.6 | 115.8 | 155.9 | 99.3 | 40.1 | 1.7 | 278.6 | 2.48 | 1.74 |
| S23 | 8 | 120.6 | 116.1 | 156.4 | 102.5 | 40.3 | 1.9 | 277.6 | 2.55 | 1.76 |
| S24 | 8 | 121.7 | 118.2 | 158.1 | 103.2 | 39.9 | 3.8 | 247.6 | 2.48 | 1.77 |
| S25 | 17 | 122.3 | 118.9 | 158.8 | 102.8 | 39.9 | 4.5 | 194.7 | 2.37 | 1.75 |
| S26 | 62 | 118.8 | 115.2 | 154.8 | 102.9 | 39.6 | 1.2 | 140.7 | 2.56 | 1.76 |
| S27 | 51 | 122.1 | 118.9 | 155.9 | 101.3 | 37.0 | 4.8 | 153.0 | 2.45 | 1.76 |
| S28 | 56 | 120.9 | 117.6 | 156.0 | 105.0 | 38.4 | 3.5 | 146.4 | 2.69 | 1.81 |

* Formula = Tcp-0.093xTmp-99.64

**Table 3.** NMR Results for inventive Polypropylenes

| Run # | Pentads | Defect/10,000 $C_3^=$ | | | |
|---|---|---|---|---|---|
| | Mole fraction | 2,1 | 2,1 | 3.1 | Total regio |
| | mmmm | erythro | threo | insertion | |
| S1 | .988 | 31 | 0 | 11 | 41 |
| S2 | .990 | 33 | 0 | 6 | 39 |
| S3 | .991 | 33 | 0 | 7 | 39 |
| S4 | .989 | 32 | 0 | 11 | 43 |
| S5 | .990 | 33 | 0 | 8 | 41 |
| S6 | .983 | 29 | 0 | 11 | 40 |
| S7 | .984 | 29 | 0 | 10 | 38 |
| S8 | .989 | 27 | 0 | 7 | 34 |
| S9 | .992 | 26 | 0 | 7 | 33 |
| S10 | .983 | 25 | 0 | 13 | 38 |
| S11 | .983 | 25 | 0 | 12 | 38 |
| S12 | .984 | 27 | 0 | 10 | 37 |
| S13 | .990 | 26 | 0 | 8 | 33 |
| S14 | .986 | 27 | 0 | 9 | 36 |
| S15 | .981 | 25 | 0 | 14 | 38 |
| S16 | .986 | 24 | 0 | 10 | 34 |
| S17 | .984 | 23 | 0 | 13 | 36 |
| S18 | .984 | 26 | 0 | 13 | 39 |
| S19 | .987 | 23 | 0 | 9 | 32 |
| S20 | .983 | 32 | 0 | 17 | 49 |
| S21 | .991 | 29 | 0 | 11 | 40 |
| S22 | .987 | 30 | 0 | 18 | 48 |
| S23 | .987 | 25 | 0 | 14 | 39 |
| S24 | .986 | 22 | 0 | 13 | 35 |
| S25 | .985 | 21 | 0 | 16 | 37 |
| S26 | .988 | 19 | 0 | 20 | 39 |
| S27 | .984 | 20 | 0 | 18 | 38 |
| S28 | .982 | 20 | 0 | 21 | 42 |

**Regio defect concentrations by $^{13}C$ NMR**

Carbon NMR spectroscopy was used to measure stereo and regio defect concentrations in the polypropylene. Carbon NMR spectra were acquired with a 10-mm broadband probe on a Varian UnityPlus 500 spectrometer. The samples were prepared in 1,1,2,2-tetrachloroethane-d2 (TCE). Sample preparation (polymer dissolution) was performed at 140 °C. In order to optimize chemical shift resolution, the samples were prepared without chromium acetylacetonate relaxation agent. Signal-to-noise was enhanced by acquiring the spectra with nuclear Overhauser enhancement for 6 seconds before the acquisition pulse. The 3.2 second acquisition period was followed by an additional delay of 5 seconds, for an aggregate pulse repetition delay of 14 seconds. Free induction decays of 3400-4400 coadded transients were acquired at a temperature of 120 °C. After Fourier transformation (256 K points and 0.3 Hz exponential line broadening),

the spectrum is referenced by setting the dominant mmmm meso methyl resonance to 21.83 ppm.

Chemical shift assignments for the stereo defects (given as stereo pentads) can be found in the literature [L. Resconi, L. Cavallo, A. Fait, and F. Piemontesi, Chem. Rev. 2000, 100, pages 1253-1345]. The stereo pentads (e.g. mmmm, mmmr, mrrm, etc.) can be summed appropriately to give a stereo triad distribution (mm, mr, and rr), and the mole percentage of stereo diads (m and r). Three types of regio defects were quantified: 2,1-erythro, 2,1-threo, and 3,1-isomerization. The structures and peak assignments for these are also given in the reference by Resconi. The concentrations for all defects are quoted in terms of defects per 10,000 monomer units.

The regio defects each give rise to multiple peaks in the carbon NMR spectrum, and these are all integrated and averaged (to the extent that they are resolved from other peaks in the spectrum), to improve the measurement accuracy. The chemical shift offsets of the resolvable resonances used in the analysis are tabulated below. The precise peak positions may shift as a function of NMR solvent choice.

| Regio defect | Chemical shift range (ppm) |
|---|---|
| 2,1-erythro | 42.3, 38.6, 36.0, 35.9, 31.5, 30.6, 17.6, 17.2 |
| 2,1 -threo | 43.4, 38.9, 35.6, 34.7, 32.5, 31.2, 15.4, 15.0 |
| 3,1 insertion | 37.6, 30.9, 27.7 |

The average integral for each defect is divided by the integral for one of the main propylene signals (CH3, CH, CH2), and multiplied by 10000 to determine the defect concentration per 10000 monomers.

**Differential Scanning Calorimetry for Measuring Crystallization and Melting Temperatures (Tcp and Tmp) and Heat of Fusion (ΔHf):**

Peak crystallization temperature (Tcp), peak melting temperature (Tmp) and heat of fusion (Hf, or ΔHf) were measured using Differential Scanning Calorimetry (DSC) on reactor samples (with no nucleating agent added). This analysis was conducted using either a TA Instruments MDSC 2920 or a Q2000 Tzero DSC. The DSC was calibrated for temperature using four standards (tin, indium, cyclohexane, and water). The heat of fusion of indium (28.46 J/g) was used to calibrate the heat flow signal. The reproducibility of peak melting temperatures for polypropylene is within ± 0.3 °C and heat of fusion is within 2%. Typically about 3 to 5 mg of polymer from the reactor was sealed in a standard aluminum pan with flat lids and loaded into the instrument at room temperature. The sample was cooled to -70 °C and heated at 10 °C/min to 210 °C to acquire the melting data (first heat). This first heating provides the melting behavior for samples made in the reactor. Since thermal history influences melting and crystallization behavior, the sample was held for 5 minutes at 210 °C to destroy its thermal history. This was followed by cooling this sample to -70 °C at a cooling rate of 10 °C/min to analyze its crystallization behavior at this cooling rate. The exothermic peak of crystallization was analyzed using the software provided by the vendor and the peak of crystallization (Tcp) is reported. The sample was held at this low temperature of -70 °C for about 10 minutes to equilibrate it and then heated back to 210 °C at 10 °C/min to analyze the melting behavior (second heat). This gave the melting behavior of samples crystallized under controlled cooling conditions (10 °C/min). The melting temperature reported is obtained by the analysis of the melting peak using the software provided by the vendor and corresponds to the peak of the melting transition (Tmp). All samples reported in this work showed relatively narrow, single melting peaks and the breadth of melting did not show any significant change for different catalysts. Area under the melting curve was used to determine the heat of fusion (ΔHf) in J/g using the software provided by the vendor. This heat of fusion is used to calculate the degree of crystallinity. The percent crystallinity is calculated using the formula: percent crystallinity = [area under the curve (J/g) / 207.14 (J/g)] x 100%. A value of 207.14 J/g or 8700 J/mol is the equilibrium heat of fusion for 100% crystalline polypropylene and is obtained from Ref: B. Wunderlich in "Thermal Analysis" Academic Press, page 418, 1990.

**Melt-Flow Rate Measurements:**

The Melt-Flow Rates (MFR) of polymers were determined by using Dynisco Kayeness Polymer Test Systems Series 4003 apparatus following the method described in the Series 4000 Melt Indexer Operation manual, Method B. The method follows ASTM D 1238, Condition L, 2.16 kg and 230 °C. All samples were stabilized by using Irganox™ 1010.

**Molecular weights (Mw, Mn and Mz) by Gel-Permeation Chromatography (GPC):**

Molecular weight distributions were characterized using Gel-Permeation Chromatography (GPC), also referred

to as Size-Exclusion Chromatography (SEC). Molecular weight (weight average molecular weight, Mw, number average molecular weight Mn, viscosity average molecular weight, Mv, and Z average molecular weight, Mz) were determined using High-Temperature Gel-Permeation Chromatography equipped with a differential refractive index detector (DRI) to measure polymer concentrations (either from Waters Corporation with on-line Wyatt DAWN "EOS" and Waters GPCV viscometer detectors, or Polymer Laboratories with on-line Wyatt mini-DAWN and Viscotek Corporation viscometer detectors. Experimental details on the measurement procedure are described in the literature by T. Sun, P. Brant, R. R. Chance, and W. W. Graessley, Macromolecules, Volume 34, Number 19, 6812-6820, (2001).

The analysis was performed using a Waters GPCV 2000 (Gel Permeation Chromatograph) with triple detection. The three detectors were in series with Wyatt DAWN "EOS" MALLS 18 angle laser light scattering detector first, followed by the DRI (Differential Refractive Index) then Differential Viscometer detector. The detector output signals are collected on Wyatt's ASTRA software and analyzed using a GPC analysis program. The detailed GPC conditions are listed in Table 8 below.

Standards and samples were prepared in inhibited TCB (1,2,4-trichlorobenzene) solvent. Four NBS polyethylene standards were used for calibrating the GPC. Standard identifications are listed in the table below. The samples were accurately weighed and diluted to a ~1.5 mg/mL concentration and recorded. The standards and samples were placed on a PL Labs 260 Heater/Shaker at 160 °C for two hours. These were filtered through a 0.45 micron steel filter cup then analyzed.

The concentration, c, at each point in the chromatogram is calculated from the baseline-subtracted DRI signal, IDRI, using the following equation:

$$c = KDRI * IDRI/(dn/dc)$$

where KDRI is a constant determined by calibrating the DRI, and (dn/dc) is the same as described below for the LS analysis. Units on parameters throughout this description of the SEC method are such that concentration is expressed in g/cm$^3$, molecular weight is expressed in g/mole, and intrinsic viscosity is expressed in dL/g.

For the light-scattering detector used at high temperature, the polymer molecular weight, M, at each point in the chromatogram is determined by analyzing the LS output using the Zimm model for static light scattering (M.B. Huglin, Light Scattering from Polymer Solutions, Academic Press, 1971):

$$\frac{K_o c}{\Delta R(\Theta)} = \frac{1}{MP(\Theta)} + 2A_2 c$$

Here, $\Delta R(\theta)$ is the measured excess Rayleigh scattering intensity at scattering angle $\theta$, c is the polymer concentration determined from the DRI analysis, A2 is the second virial coefficient, $P(\theta)$ is the form factor for a monodisperse random coil (described in the above reference), and Ko is the optical constant for the system:

$$K_o = \frac{4\pi^2 n^2 (dn/dc)^2}{\lambda^4 N_A}$$

in which NA is Avogadro's number, and (dn/dc) is the refractive index increment for the system. The refractive index, n = 1.500 for TCB at 135 °C and $\lambda$ = 690 nm. In addition, A2 = 0.0006 for propylene polymers and 0.0015 for butene polymers, and (dn/dc) = 0.104 for propylene polymers and 0.098 for butene polymers.

A high temperature Viscotek Corporation viscometer was used, which has four capillaries arranged in a Wheatstone bridge configuration with two pressure transducers. One transducer measures the total pressure drop across the detector, and the other, positioned between the two sides of the bridge, measures a differential pressure. The specific viscosity, $\eta$s, for the solution flowing through the viscometer is calculated from their outputs. The intrinsic viscosity, [$\eta$] i, at each point in the chromatogram is calculated from the following equation:

$$[\eta]_i = \eta_{si} / C_i$$

where the concentration, Ci, was determined from the DRI output.

The branching index (g') is calculated using the output of the SEC-DRI-LS-VIS method as follows. The branching index g' is defined as: Sample measured [$\eta$] / calculated theoretical [$\eta$] of a linear polymer, where the calculated theoretical

[η] of a linear = k Mα, where k = 0.0002288 and α = 0.705 for propylene polymers.

Mv is the viscosity average molecular weight based on molecular weights determined by light-scattering (LS) analysis. The viscosity average molecular weight, Mv, of the sample is calculated by:

$$Mv = \{\Sigma hiMi\alpha / \Sigma\ hi\} 1/\alpha$$

Mi = molecular weight for each time slice, hi, from the chromatogram, and the summations are carried out over all chromatographic slices, i.e., between the integration limits.

**Table 4:** Gel Permeation Chromatography (GPC) measurement conditions

| | | |
|---|---|---|
| Instrument | | WATERS 2000V+Wyatt Dawn EOS |
| Column | Type: | 3 x MIXED BED TYPE "B" 10 MICRON PD (high porosity col.'s) |
| | Length: | 300 mm |
| | ID: | 7.8mm |
| | Supplier | POLYMER LABS |
| Solvent Program | A | 0.54 ml/min TCB inhibited |
| | | GPC console setting was 0.5 mL/min to which 8% expansion factor (from Waters) makes actual flow 0.54 mL/min |
| Detector | A: | Wyatt MALLS 17 angle's of laser light scattering detector |
| | B: | Differential Refractive Index (DRI) in series |
| | C: | Viscometer |
| | | IDvol.=+232.2 microliter LS to DRI |
| | | IDvol.=-91.8 microliter Dp to KRI |
| Temperature | Injector: | 135 °C |
| | Detector: | 135 °C |
| | Column: | 135 °C |
| Dissolution Conditions | | Shaken for 2 h on a PL SP 260 heat |
| | | Shaker @ 160 °C |
| Sample Filtration | | Through a 0.45 μ SS Filter @ 135 °C |
| Injection Volume | | 329.5 μL |
| Sample Concentration | | 0.15 w/v% (1.5 mg/m) Target wt |
| Solvent Diluent | | TCB inhibited |
| Calibration Narrow PE Standards | | NIST 1482a; NIST 1483a; NIST 1484a |
| Broad PE Standard | | NIST 1475a |

While the foregoing is directed to embodiments of the present invention, other and further embodiments of the invention can be devised without departing from the basic scope thereof, and the scope thereof is determined by the claims that follow.

## Claims

1. A continuous process to produce polypropylene comprising contacting propylene in a reactor at 80 to 150°C and 6.9 to 34.5 MPa, in the presence of an activator and a metallocene represented by the formula:

$R_2Q$ bis(2-$R^1$-4-$R^2$-indenyl)$MX_2$

wherein each R is, independently, hydrogen or a $C_1$ to $C_{20}$ hydrocarbyl group, Q is Si, C, CH-CH, or C-$CH_2$, $R^1$ is a $C_4$ to $C_{12}$ linear, branched or cyclic alkyl group, each $R^2$ is, independently, a naphthyl, substituted phenyl or substituted naphthyl group, M is Hf or Zr and X is a halide or a $C_1$ to $C_{20}$ hydrocarbyl group, wherein 15 to 30 wt % propylene monomer, and 85 wt % to 70 wt % solvent, based on total weight of propylene monomer and solvent, are fed into the polymerization reactor, and the polymerization occurs at a temperature above the solid-fluid phase transition temperature of the polymerization system and above a pressure greater than 1 MPa below the cloud point pressure of the polymerization system, provided however that the polymerization occurs: (1) at a temperature below the critical temperature of the polymerization system, or (2) at a pressure below the critical pressure of the polymerization system,
recovering an isotactic propylene homopolymer having:

1) more than 15 and less than 100 regio defects (sum of 2,1-erythro and 2,1-threo insertions and 3,1- isomerizations) per 10,000 propylene units;
2) an Mw (weight average molecular weight) of 35,000 g/mol or more;
3) a peak melting temperature of greater than 149 °C;
4) an mmmm pentad fraction of 0.85 or more;
5) a heat of fusion of 80 J/g or more; and
6) a peak melting temperature minus peak crystallization temperature (Tmp-Tcp) of less than or equal to (0.907 times Tmp) minus 99.64 ($Tmp-Tcp \leq (0.907xTmp) - 99.64$), as measured in °C on the homopolymer having 0 wt % nucleating agent.

2. The process according to preceding claim 1 wherein the recovered isotactic propylene homopolymer has an Mw (weight average molecular weight) of 100,000 or more.

3. The process according to preceding claims 1-2 wherein the polypropylene has an Mw/Mn ratio of greater than 1 to less than 5.

4. The process according to any of preceding claims 1-3, wherein the peak melting temperature minus peak crystallization temperature (Tmp-Tcp) is less than or equal to (0.907 times Tmp) minus 100.14 (preferably 100.64), (measured in °C on the homopolymer having 0 wt % nucleating agent).

5. The process according to any of preceding claims 1-4, wherein the polypropylene has an mmmm pentad fraction of 0.98 or greater; and/or a heat of fusion of 100 J/g or more; and/or a peak melting temperature (Tmp) of 152 °C to 170 °C; and/or more than 17 and less than 95 defects per 10,000 propylene units; and/or an mmmm pentad fraction of 0.95 or greater; and/or a branching index (g') of between 0.85 to 1.10.

6. The process according to any of preceding claims 1-5, wherein Mw is 200,000 g/mol or greater, the mmmm pentad fraction is 0.98 or greater, the peak melting temperature (Tmp) is 150 °C to 170 °C, the heat of fusion is 95 J/g or greater and wherein the metallocene is selected from the group consisting of: dimethylsilyl-bis(2-methyl-4-(3',5'-di-t-butylphenyl)indenyl)zirconium dimethyl (or dichloride), dimethylsilyl-bis(2-methyl-4-naphthylindenyl)zirconium dimethyl (or dichloride), dimethylsilyl-bis(2-methyl-4-(3',5'-di-t-butyl-phenyl)indenyl)hafnium dimethyl (or dichloride), dimethylsilyl-bis(2-methyl-4-naphthylindenyl)hafnium dimethyl (or dichloride), or mixtures thereof, and the activator is selected from the group consisting of aluminoxane, trimethylammoniumtetrakis(pentafluorophenyl)borate, N,N-dimethylaniliniumtetrakis(pentafluorophenyl)borate, triphenylcarbeniumtetrakis(perfluorophenyl)borate, N,N-dimethylaniliniumtetrakis(perfluoronaphthyl)borate, N,N-dimethylaniliniumtetrakis(perfluorophenyl)-borate, and mixtures thereof.

7. The process according to any of preceding claims 1-6, wherein the residence time is from 3 minutes to 30 minutes.

8. The process according to any of preceding claims 1-7, wherein Mw is 200,000 g/mol or greater, the mmmm pentad fraction is 0.98 or greater, the peak melting temperature (Tmp) is 149 °C to 170 °C, and the heat of fusion is 95 J/g or greater.

9. The process according to any of preceding claims 1-8, wherein the metallocene is selected from the group consisting of: dimethylsilyl-bis(2-methyl-4-(3',5'-di-t-butylphenyl)indenyl)zirconium dimethyl (or dichloride), dimethylsilyl-bis(2-methyl-4-naphthylindenyl)zirconium dimethyl (or dichloride), dimethylsilyl-bis(2-methyl-4-(3',5'-di-t-butyl-phenyl)indenyl)hafnium dimethyl (or dichloride), and dimethylsilyl-bis(2-methyl-4-naphthylindenyl)hafnium dimethyl (or dichloride), or mixtures thereof.

**10.** The process according to any of preceding claims 1-9, wherein from 20 wt % to 30 wt % propylene monomer and from 80 wt % to 70 wt % solvent, based on total weight of propylene monomer and solvent, are fed into the polymerization reactor.

**11.** The process according to any of preceding claims 1-10, wherein the catalyst productivity is 100,000 g polymer per g of metallocene or more.

**12.** The process according to any of preceding claims 1-11, wherein the activator is selected from the group consisting of aluminoxane, trimethylammoniumtetrakis(pentafluorophenyl)borate, N,N-dimethylaniliniumtetrakis(pentafluorophenyl)borate, triphenylcarbeniumtetrakis(perfluorophenyl)borate, N,N-dimethylaniliniumtetrakis(perfluoronaphthyl)borate, N,N-dimethylaniliniumtetrakis(perfluorophenyl)-borate, and mixtures thereof.

**Patentansprüche**

**1.** Ein kontinuierliches Verfahren zur Herstellung von Polypropylen bei dem Propylen in einem Reaktor bei 80 bis 150 °C und 6,9 bis 34,5 MPa in der Anwesenheit eines Aktivators und ein Metallocen, das durch die Formel:

$$R_2Q \text{ bis } (2\text{-}R^1\text{-}4\text{-}R^2\text{-indenyl})MX_2$$

dargestellt wird, in Kontakt gebracht werden,
wobei jedes R unabhängig voneinander Wasserstoff oder eine $C_1$- bis $C_{20}$-Kohlenwasserstoffgruppe ist, Q Si, C, CH-CH, oder C-$CH_2$ ist, $R^1$ eine lineare, verzweigte oder cyclische $C_1$- bis $C_{12}$-Aklkylgruppe ist, jedes $R^2$ unabhängig voneinander eine Naphthyl-, substituierte Phenyl- oder substituierte Naphthylgruppe ist, M Hf oder Zr ist und X ein Halogen oder eine $C_1$- bis $C_{20}$-Kohlenwasserstoffgruppe ist, wobei 15 bis 30 Gew.-% Propylenmonomer und 85 Gew.-% bis 70 Gew.-% Lösungsmittel bezogen auf das Gesamtgewicht von Propylenmonomer und Lösungsmittel in den Polymerisationsreaktor eingespeist werden und die Polymerisation bei einer Temperatur oberhalb des Fest-Flüssig-Phasenübergangs des Polymerisationssystems und oberhalb eines Druck von mehr als 1 MPa unterhalb des Trübungspunktdrucks des Polymerisationssystems stattfindet, jedoch vorausgesetzt, dass die Polymerisation (1) bei einer Temperatur unterhalb der kritischen Temperatur des Polymerisationssystems oder (2) bei einem Druck unterhalb des kritischen Drucks des Polymerisationssystems stattfindet,
ein isotaktisches Propylenhomopolymer gewonnen wird, das

1) mehr als 15 und weniger als 100 Regiodefekte (Summe der 2,1-erythro und 2,1-threo-Insertionen und 3,1-Isomerisierungen) pro 10.000 Propyleneeinheiten,
2) ein Mw (gewichtsmittleres Molekulargewicht) von 35.000 g/mol oder mehr,
3) eine Peakschmelztemperatur von mehr als 149 °C,
4) einen mmmm-Pentadenanteil von 0,85 oder mehr,
5) eine Schmelzwärme von 80 J/g oder mehr und
6) eine Peakschmelztemperatur minus Peakkristallisationstemperatur (Tmp-Tcp) von weniger als oder gleich (0,907 mal Tmp) minus 99,64 ($Tmp\text{-}Tcp \leq (0{,}907 x Tmp)\text{-}99{,}64$), gemessen in °C an dem Homopolymer mit 0 Gew.-% Keimbildner, aufweist.

**2.** Verfahren nach dem vorhergehenden Anspruch 1, wobei das gewonnene, isotaktische Propylenhomopolymer ein Mw (gewichtsmittleres Molekulargewicht) von 100.000 oder mehr aufweist.

**3.** Verfahren nach den vorhergehenden Ansprüchen 1 bis 2, wobei das Polypropylen ein Mw/Mn-Verhältnis von mehr als 1 bis weniger als 5 aufweist.

**4.** Verfahren nach einem der vorhergehenden Ansprüche 1 bis 3, wobei die Peakschmelztemperatur minus der Peakkristallisationstemperatur (Tmp-Tcp) weniger als oder gleich (0,907 mal Tmp) minus 100,14 (bevorzugt 100,64) ist (gemessen in °C an dem Homopolymer mit 0 Gew.-% Keimbildner).

**5.** Verfahren nach einem der vorhergehenden Ansprüche 1 bis 4, wobei das Polypropylen einen mmmm-Pentadenanteil von 0,98 oder mehr und/oder eine Schmelzwärme von 100 J/g oder mehr und/oder eine Peakschmelztemperatur

(Tmp) von 152 °C bis 170 °C und/oder mehr als 17 und weniger als 95 Defekte pro 10.000 Propyleneinheiten und/oder einen mmmm-Pentadenanteil von 0,95 oder mehr und/oder einen Verzweigungsindex (g') zwischen 0,85 und 1,10 aufweist.

**6.** Verfahren nach einem der vorhergehenden Ansprüche 1 bis 5, wobei Mw 200.000 g/mol oder größer ist, der mmmm-Pentadenanteil 0,98 oder größer ist, die Peakschmelztemperatur (Tmp) 150 °C bis 170 °C beträgt, die Schmelzwärme 95 J/g oder größer ist und wobei das Metallocen ausgewählt ist aus der Gruppe bestehend aus Dimethylsilyl-bis(2-methyl-4-(3',5'-di-t-butylphenyl)indenyl)zirconiumdimethyl (oder -dichlorid), Dimethylsilyl-bis(2-methyl-4-naphthylindenyl)zirconiumdimethyl (oder -dichlorid), Dimethylsilyl-bis(2-methyl-4-(3',5'-di-t-butylphenyl)indenyl)hafniumdimethyl (oder -dichlorid), Dimethylsilyl-bis(2-methyl-4-naphthylindenyl)hafniumdimethyl (oder -dichlorid) oder Mischungen davon und der Aktivator ausgewählt ist aus der Gruppe bestehend aus Aluminoxan, Trimethylammoniumtetrakis(pentafluorophenyl)borat, N,N-Dimethylaniliniumtetrakis(pentafluorophenyl)borat, Triphenylcarbeniumtetrakis(perfluorophenyl)borat, N,N-Dimethylaniliniumtetrakis(perfluoronaphthyl)borat, N,N-Dimethylaniliniumtetrakis(perfluorophenyl)borat und Mischungen davon.

**7.** Verfahren nach einem der vorhergehenden Ansprüche 1 bis 6, wobei die Verweilzeit 3 Minuten bis 30 Minuten beträgt.

**8.** Verfahren nach einem der vorhergehenden Ansprüche 1 bis 7, wobei Mw 200000 g/mol oder größer ist, der mmmm-Pentadenanteil 0,98 oder größer ist, die Peakschmelztemperatur (Tmp) 149 °C bis 170 °C beträgt und die Schmelzwärme 95 J/g oder größer ist.

**9.** Verfahren nach einem der vorhergehenden Ansprüche 1 bis 8, wobei das Metallocen ausgewählt ist aus der Gruppe bestehend aus Dimethylsilyl-bis(2-methyl-4-(3',5'-di-t-butylphenyl)indenyl)zirconiumdimethyl (oder -dichlorid), Dimethylsilyl-bis(2-methyl-4-naphthylindenyl)zirconiumdimethyl (oder - dichlorid), Dimethylsilyl-bis(2-methyl-4-(3',5'-di-t-butylphenyl)indenyl)hafniumdimethyl (oder -dichlorid) und Dimethylsilyl-bis(2-methyl-4-naphthylindenyl)hafniumdimethyl (oder -dichlorid) oder Mischungen davon.

**10.** Verfahren nach einem der vorhergehenden Ansprüche 1 bis 9, wobei 20 Gew.-% bis 30 Gew.-% Propylenmonomer und 80 Gew.-% bis 70 Gew.-% Lösungsmittel bezogen auf das Gesamtgewicht von Propylenmonomer und Lösungsmittel in den Polymerisationsreaktor eingespeist werden.

**11.** Verfahren nach einem der vorhergehenden Ansprüche 1 bis 10, wobei die Katalysatorproduktivität 100.000 g Polymer pro g Metallocen oder mehr beträgt.

**12.** Verfahren nach einem der vorhergehenden Ansprüche 1 bis 11, wobei der Aktivator ausgewählt ist aus der Gruppe bestehend aus Aluminoxan, Trimethylammoniumtetrakis(pentafluorophenyl)borat, N,N-Dimethylaniliniumtetrakis(pentafluorophenyl)borat, Triphenylcarbeniumtetrakis(perfluorophenyl)-borat, N,N-Dimethylaniliniumtetrakis(perfluoronaphthyl)borat, N,N-Dimethylaniliniumtetrakis(perfluorophenyl)borat und Mischungen davon.

**Revendications**

**1.** Procédé continu de production de polypropylène comprenant la mise en contact de polypropylène dans un réacteur entre 80 et 150 °C et entre 6,9 et 34,5 MPa, en présence d'un activateur et d'un métallocène répondant à la formule :

$$R_2Q \text{ bis } (2\text{-}R^1\text{-}4\text{-}R^2\text{-indényl})MX_2$$

où chacun des radicaux R représente indépendamment un atome d'hydrogène ou un groupement hydrocarbyle en $C_1$ à $C_{20}$, Q représente Si, C, CH-CH ou C-$CH_2$, $R^1$ représente un groupement alkyle linéaire, ramifié ou cyclique en $C_1$ à $C_2$, chacun des radicaux $R^2$ représente indépendamment un groupement naphtyle, phényle substitué ou naphtyle substitué, M représente Hf ou Zr et X représente un halogénure ou un groupement hydrocarbyle en $C_1$ à $C_{20}$, où 15 à 30 % en masse du monomère propylène, et 85 % en masse à 70 % en masse de solvant, par rapport à la masse totale de monomère propylène et de solvant, sont introduits dans le réacteur de polymérisation, et la polymérisation se produit à une température supérieure à la température de transition solide-phase fluide du système de polymérisation est au-dessus d'une pression supérieure à 1 MPa en dessous de la pression du point de trouble du système de polymérisation, à la condition, cependant, que la polymérisation se déroule : (1) à une température inférieure à la température critique du système de polymérisation, ou (2) à une pression inférieure à la pression critique du système de polymérisation,

pour récupérer un homopolymère de propylène isotactique présentant :

1) plus de 15 et moins de 100 régie-défauts (somme des insertions 2,1-érythro et 2,1-thréo et des 3,1-isomérisations) pour 10 000 motifs propylène ;
2) une Mw (masse moléculaire moyenne en poids) de 35 000 g/mol ou plus ;
3) une température de fusion maximale supérieure à 149 °C ;
4) une fraction mmmm pentadaire de 0,85 ou plus ;
5) une chaleur de fusion de 80 J/g ou plus ; et
6) une température de fusion maximale moins la température de cristallisation maximale (Tmp-Tcp) inférieure ou égale à (0,907 fois Tmp) moins 99,64 (Tmp-Tcp ≤ (0,907xTmp) - 99,64), comme mesuré en °C sur l'homopolymère ayant 0 % en masse d'agent de nucléation.

**2.** Procédé selon la revendication 1 précédente, où l'homopolymère de propylène isotactique récupéré présente une Mw (masse moléculaire moyenne en poids) de 100 000 ou plus.

**3.** Procédé selon les revendications 1 à 2 précédentes, où le polypropylène présente un rapport Mw/Mn supérieur à 1 et inférieur à 5.

**4.** Procédé selon l'une quelconque des revendications 1 à 3 précédentes, où la température de fusion maximale moins la température de cristallisation maximale (Tmp-Tcp) est inférieure ou égale à (0,907 fois Tmp) moins 100,14 (préférentiellement 100,64), mesurée en °C sur l'homopolymère ayant 0 % en masse d'agent de nucléation.

**5.** Procédé selon l'une quelconque des revendications 1 à 4 précédentes, où le polypropylène présente une fraction mmmm pentadaire de 0,98 ou plus ; et/ou une chaleur de fusion de 100 J/g ou plus ; et/ou une température de fusion maximale (Tmp) de 152 °C à 170 °C ; et/ou plus de 17 et moins de 95 défauts pour 10 000 motifs propylène ; et/ou une fraction mmmm pentadaire de 0,95 ou plus ; et/ou un indice de ramification (g') compris entre 0,85 et 1,10.

**6.** Procédé selon l'une quelconque des revendications 1 à 5 précédentes, où Mw est de 200 000 g/mol ou plus, la fraction mmmm pentadaire est de 0,98 ou plus, la température de fusion maximale (Tmp) est comprise entre 150 °C et 170 °C, la chaleur de fusion est de 95 J/g ou plus, et où le métallocène est choisi dans le groupe constitué par : diméthylsilyl-bis(2-méthyl-4-(3',5'-di-t-butyl-phényl)indényl)zirconium diméthyle (ou dichlorure), diméthylsilyl-bis(2-méthyl-4-naphtylindényl)zirconium diméthyle (ou dichlorure), diméthylsilyl-bis(2-méthyl-4-(3',5'-di-t-butyl-phényl)indényl)hafnium diméthyle (ou dichlorure), diméthylsilyl-bis(2-méthyl-4-naphtylindényl)hafnium diméthyle (ou dichlorure), ou leurs mélanges, et l'activateur est choisi dans le groupe constitué par aluminoxane, tétrakis(pentafluorophényl)borate de triméthylammonium, tétrakis(pentafluorophényl)borate de N,N-diméthylanilinium, tétrakis(perfluorophényl)borate de triphénylcarbénium, tétrakis(perfluoronaphtyl)borate de N,N-diméthyl-anilinium, tétrakis(perfluorophényl)-borate de N,N-diméthylanilinium, et leurs mélanges.

**7.** Procédé selon l'une quelconque des revendications 1 à 6 précédentes, où la durée de résidence est comprise entre 3 minutes et 30 minutes.

**8.** Procédé selon l'une quelconque des revendications 1 à 7 précédentes, où Mw est de 200 000 g/mol ou plus, la fraction mmmm pentadaire est de 0,98 ou plus, la température de fusion maximale (Tmp) est comprise entre 149 °C et 170 °C, et la chaleur de fusion est de 95 J/g ou plus.

**9.** Procédé selon l'une quelconque des revendications 1 à 8 précédentes, où le métallocène est choisi dans le groupe constitué par : diméthylsilyl-bis(2-méthyl-4-(3',5'-di-t-butyl-phényl)indényl)zirconium diméthyle (ou dichlorure), diméthylsilyl-bis(2-méthyl-4-naphtylindényl)zirconium diméthyle (ou dichlorure), diméthylsilyl-bis(2-méthyl-4-(3',5'-di-t-butyl-phényl)indényl)hafnium diméthyle (ou dichlorure), et diméthylsilyl-bis(2-méthyl-4-naphtylindényl)hafnium diméthyle (ou dichlorure), ou leurs mélanges.

**10.** Procédé selon l'une quelconque des revendications précédentes 1 à 9, où entre 20 % en masse et 30 % en masse de monomère de propylène et entre 80 % en masse et 70 % en masse de solvant, par rapport à la masse totale de monomère de propylène et de solvant, sont introduits dans le réacteur de polymérisation.

**11.** Procédé selon l'une quelconque des revendications 1 à 10 précédentes, où la productivité du catalyseur est de 100 000 g de polymère par g de métallocène ou plus.

**12.** Procédé selon l'une quelconque des revendications 1 à 11 précédentes, où l'activateur est choisi dans le groupe constitué par aluminoxane, tétrakis(pentafluorophényl)borate de triméthylammonium, tétrakis(pentafluorophényl)borate de N,N-diméthylanilinium, tétrakis(perfluorophényl)borate de triphénylcarbénium, tétrakis(perfluoronaphtyl)borate de N,N-diméthyl-anilinium, tétrakis(perfluorophényl)-borate de N,N-diméthylanilinium, et leurs mélanges.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5756608 A
- US 20080214767 A1
- US 10667585 B
- US 20060293474 A
- WO 2004026921 A
- WO 11714546 A
- WO 03040095 A
- WO 03040201 A
- WO 03040202 A
- WO 03040233 A
- WO 03040442 A
- US 7087690 B


### Non-patent literature cited in the description


- **J. VLADIMIR OLIVEIRA ; C. DARIVA ; J. C. PINTO.** *Ind. Eng, Chem. Res.,* 2000, vol. 29, 4627
- *Chemical and Engineering News,* 1985, vol. 63 (5), 27
- Handbook of Chemistry and Physics. CRC Press, 2001
- **J. VLADIMIR OLIVEIRA ; C. DARIVA ; J. C. PINTO.** *Ind. Eng. Chem. Res.,* 2000, vol. 29, 4627
- **L. RESCONI ; L. CAVALLO ; A. FAIT ; F. PIEMONTESI.** *Chem. Rev.,* 2000, vol. 100, 1253-1345
- **B. WUNDERLICH.** Thermal Analysis. Academic Press, 1990, 418
- **T. SUN ; P. BRANT ; R. R. CHANCE ; W. W. GRAESSLEY.** *Macromolecules,* 2001, vol. 34 (19), 6812-6820
- **M.B. HUGLIN.** Light Scattering from Polymer Solutions. Academic Press, 1971